# EUROPEAN PATENT SPECIFICATION

(11) **EP 4 391 191 B1**
(45) Date of publication and mention of the grant of the patent: **12.08.2026**
(21) Application number: 22916539.4
(22) Date of filing: 12.12.2022
(51) Int. Cl.: H01M 50/367, H01M 50/383, H01M 50/211, H01M 50/247

(54) **CELL UNIT AND BATTERY PACK INCLUDING THE SAME**
ZELLENEINHEIT UND BATTERIEPACK DAMIT
UNITÉ DE CELLULE ET BLOC-BATTERIE L'INCLUANT

(30) Priority: 27.12.2021 KR 20210188345; 28.11.2022 KR 20220161188
(43) Date of publication of application: 26.06.2024
(73) Proprietor: LG Energy Solution, Ltd., Seoul 07335 (KR)
(72) Inventor: SHIN, Ju-Hwan, Daejeon 34122 (KR); LEE, Jae-Hyun, Daejeon 34122 (KR); LEE, Tae-Kyeong, Daejeon 34122 (KR); LEE, Hyoung-Suk, Daejeon 34122 (KR)
(74) Representative: Plasseraud IP
(86) International application number: PCT/KR2022/020160
(87) International publication number: WO 2023/128394

(56) References cited:
- EP-A1- 4 297 167
- AU-A1- 2020 300 283
- CN-A- 103 378 319
- CN-A- 112 838 325
- CN-A- 113 794 011
- KR-A- 20050 107 169
- KR-A- 20190 069 873
- US-A1- 2017 309 878

## Description

### TECHNICAL FIELD

The present application claims priority to Korean Patent Application Nos. 10-2021-0188345 and 10-2022-0161188, respectively filed on December 27, 2021 and November 28, 2022.

The present disclosure relates to a battery, and more particularly, to a cell unit having a simple structure and excellent scalability and safety, and a battery pack and a vehicle including the cell unit.

### BACKGROUND ART

As the demand for portable electronic products such as laptops, video cameras, and mobile phones has rapidly increased and the commercialization of robots, electric vehicles, etc. has begun in earnest, research on high-performance secondary batteries capable of repeated charging/discharging has been actively conducted.

Currently commercialized secondary batteries include nickel cadmium batteries, nickel hydride batteries, nickel zinc batteries, and lithium secondary batteries. Among them, lithium secondary batteries are in the spotlight because they have almost no memory effect compared to nickel-based secondary batteries, and thus, have advantages of free charge/discharge, very low self-discharge rate, and high energy density.

A lithium secondary battery mainly uses a lithium-based oxide and a carbon material as a positive electrode active material and a negative electrode active material, respectively. A lithium secondary battery includes an electrode assembly in which a positive electrode plate and a negative electrode plate coated with a positive electrode active material and a negative electrode active material are located with a separator therebetween, and a casing in which the electrode assembly is air-tightly accommodated together with an electrolyte, that is, a battery case.

In general, according to a shape of a casing, secondary batteries may be classified into can-type secondary batteries (can-type cells) in which an electrode assembly is received in a metal can, and pouch-type secondary batteries (pouch-type cells) in which an electrode assembly is received in a pouch of an aluminum laminate sheet.

In particular, a pouch-type cell has advantages in various aspects such as light weight and small dead space during stacking, but has problems in that it is vulnerable to external impact and has poor assemblability and processability. Accordingly, in the prior art, a battery pack is often manufactured by forming a battery module by accommodating a plurality of pouch-type cells in a module housing (module case) and then accommodating the module case in a pack housing (pack case).

However, such a conventional battery pack may be inefficient in terms of space utilization. In particular, in a process of accommodating and modularizing a plurality of battery cells in a module housing, a volume of the battery pack may be unnecessarily increased or a space occupied by the battery cells may be reduced due to various components such as the module housing or a stacking frame (cartridge). Furthermore, in order to secure an assembly tolerance for elements such as the module housing or the stacking frame as well as a space occupied by the elements, a storage space of the battery cells may be reduced. Accordingly, the conventional battery pack may have limitations increasing energy density.

Also, the conventional battery pack may be disadvantageous in terms of assemblability and manufacturing cost. In particular, the conventional battery pack has problems in that a structure is complicated and manufacturing cost and time are increased due to various elements for stacking the pouch-type cells.

Also, the conventional battery pack has a problem in that, once a size or a shape of the battery module is determined, it is very difficult to change the size or the shape. Accordingly, it may be very difficult to apply one battery module to several pack housings or change an internal structure of the pack housing. Hence, the conventional battery pack may have low scalability.

Because a plurality of battery cells are included in a battery pack, the battery pack may be vulnerable to a thermal chain reaction between the battery cells. For example, when an event such as thermal runaway occurs in one battery cell, there is a risk of propagation of the thermal runaway to other battery cells. When such thermal runaway propagation is not appropriately suppressed, an event occurring in a specific cell may cause a chain reaction between several battery cells. This may cause an explosion or fire of the battery pack, and may further cause great damage to a device in which the battery pack is mounted or to other nearby equipment or users.

US 2017/0309878 A1 discloses a secondary battery. EP 4 297 167 A1, which falls under Article 54(3) EPC, discloses a battery assembly with reinforced safety. AU 2020300283 A1 discloses a cell unit according to the preamble of claim 1, a battery module, battery rack comprising the same, and power storage device.

### DISCLOSURE

### Technical Problem

The present disclosure is designed to solve the problems of the related art, and therefore the present disclosure is directed to providing a cell unit having excellent energy density, scalability, and safety, and a battery pack and a vehicle including the cell unit.

However, technical objectives to be achieved by the present disclosure are not limited thereto, and other unmentioned technical objectives will be apparent to one of ordinary skill in the art from the description of the present disclosure.

### Technical Solution

A cell unit according to the invention is laid out in appended claim 1.

Also, the unit case may include a unit terminal electrically connected to an electrode lead of the at least one pouch-type cell accommodated in the inner space and exposed to outside.

Also, the venting member may be formed in a plate shape and face adjacent pouch-type cells.

Also, the venting member may be attached to an inner surface of the unit case.

Also, the venting member may be located on each of both sides of the plurality of pouch-type cells accommodated in the unit case.

Also, the venting member may include an inlet formed in a side surface facing the plurality of pouch-type cells and an outlet formed in a side surface not facing the plurality of pouch-type cells.

Also, the venting member may include an inlet formed in a portion facing a terrace portion of the plurality of pouch-type cells.

Also, the venting member may be configured so that a flow direction of a fluid introduced into an inlet and a flow direction of a fluid flowing through the venting passage are perpendicular to each other.

Also, the venting member may be configured so that a flow direction of a fluid flowing through the venting passage and a flow direction of a fluid discharged to an outlet are perpendicular to each other.

Also, the venting member may include inlets formed in opposite side surfaces, wherein the inlets formed in the opposite side surfaces are not symmetrical to each other.

Also, the venting member may include two or more unit passages in an inner space, wherein the inlets formed in the opposite side surfaces communicate with different unit passages.

Also, the unit case may include a venting hole formed at a position corresponding to an outlet of the venting member.

Also, the cell unit according to the present disclosure may further include a support member supporting facing inner surfaces of the unit case.

Also, two pouch-type cells may be arranged in the inner surface of the unit case so that side surfaces provided with electrode leads face each other, wherein the support member is located between the two pouch-type cells arranged so that the electrode leads face each other.

Also, a battery pack according to another aspect of the present disclosure includes a plurality of cell units according to the present disclosure.

### Advantageous Effects

According to an aspect of the present disclosure, when a battery pack including a plurality of pouch-type cells is configured, space utilization may be improved. Furthermore, in the present disclosure, a space occupied by the pouch-type cells may be increased. Accordingly, the battery pack having high energy density may be provided.

Also, according to an aspect of the present disclosure, a cell unit having a simple structure may be provided. Accordingly, a battery pack having excellent productivity and reduced manufacturing cost and time may be implemented.

Also, according to an aspect of the present disclosure, a pouch-type cell may be efficiently protected and handled during manufacture of a battery pack. Accordingly, assemblability and processability of the battery pack may be further improved.

Also, according to an aspect of the present disclosure, a cell unit having a configuration different from that of a conventional battery module may be provided. In particular, the cell unit according to an aspect of the present disclosure may be configured as a smaller-scale unit than the conventional battery module. For example, the cell unit according to the present disclosure may have a smaller number of cells or a smaller size than the conventional battery module.

Also, according to an aspect of the present disclosure, excellent scalability may be ensured, compared to a conventional battery module or a conventional battery pack. In particular, a small cell group (cell unit) according to the present disclosure may be easily applied to a pack housing having any of various shapes or sizes. Accordingly, in the present disclosure, compatibility with various types of battery packs is excellent, and even when a design of a pack housing or the like is changed, excellent scalability that may be easily modified and applied accordingly may be ensured.

Also, according to an aspect of the present disclosure, thermal event propagation between cells may be effectively suppressed. In particular, in the present disclosure, because a venting structure included in a cell unit is connected to a venting path (pack channel) to perform rapid directional venting control, propagation of thermal runaway may be effectively prevented.

The present disclosure may have various other effects, which will be described in each embodiment, or descriptions of effects that may be easily inferred by one of ordinary skill in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is an exploded perspective view schematically illustrating a configuration of a cell unit, according to an embodiment of the present disclosure.
FIG. 2 is a combined perspective view illustrating the configuration of FIG. 1.
FIG. 3 is a perspective view schematically illustrating a configuration of a venting member, according to an embodiment of the present disclosure.
FIG. 4 is a cross-sectional view schematically illustrating a configuration of a venting member, according to an embodiment of the present disclosure.
FIGS. 5 and 6 are perspective views schematically illustrating a configuration of a cell unit, according to different embodiments of the present disclosure.
FIG. 7 is a side view schematically illustrating a configuration of a portion of a cell unit, according to still another embodiment of the present disclosure.
FIG. 8 is an enlarged perspective view schematically illustrating some elements of a cell unit, according to an embodiment of the present disclosure.
FIG. 9 is a perspective view illustrating a venting member included in a cell unit, viewed from the bottom, according to an embodiment of the present disclosure.
FIG. 10 is an enlarged view illustrating a portion A5 of FIG. 9.
FIG. 11 is a perspective view illustrating a configuration of a cell unit, viewed from the bottom, according to an embodiment of the present disclosure.
FIG. 12 is an enlarged view illustrating a portion A6 of FIG. 11.
FIG. 13 is a top cross-sectional view schematically illustrating a configuration of a cell unit, according to another embodiment.
FIGS.14 and 15 are exploded perspective views illustrating some elements of a cell unit, viewed from different directions, according to an embodiment of the present disclosure.
FIG. 16 is an exploded perspective view schematically illustrating a configuration of a venting member, according to an embodiment of the present disclosure.
FIG. 17 is a view schematically illustrating an internal configuration of a venting member, according to an embodiment of the present disclosure.
FIG. 18 is a partially enlarged view schematically illustrating an internal configuration of a venting member, according to another embodiment of the present disclosure.
FIG.19 is a bottom perspective view schematically illustrating a configuration of a venting member, according to still another embodiment of the present disclosure.
FIG. 20 is a bottom perspective view schematically illustrating a configuration of a cell unit including the venting member of FIG. 19.
FIG. 21 is a cross-sectional view taken along line A9-A9' of FIG. 2.
FIGS. 22 and 23 are exploded perspective views schematically illustrating a configuration of a cell unit, according to various embodiments of the present disclosure.
FIG. 24 is an exploded perspective view schematically illustrating some elements of a battery pack, according to an embodiment of the present disclosure.
FIG. 25 is a view illustrating a movement of venting gas in a battery pack, according to an embodiment of the present disclosure.

### DETAILED DESCRIPTION

Hereinafter, preferred embodiments of the present disclosure will be described in detail with reference to the accompanying drawings.

Therefore, the description proposed herein is just a preferable example for the purpose of illustrations only, not intended to limit the scope of the present disclosure, so it should be understood that other equivalents and modifications could be made thereto without departing from the scope of the present disclosure.

It will be understood by one of ordinary skill in the art that when terms indicating directions such as upper, lower, left, right, front, and rear are used, these terms are only for convenience of explanation and may vary according to a position of a target object, a position of an observer, etc.

Also, in this specification, various embodiments are described. For each embodiment, a difference from other embodiments will be mainly described, and a detailed description of parts that are the same as or similar to those in other embodiments will be omitted.

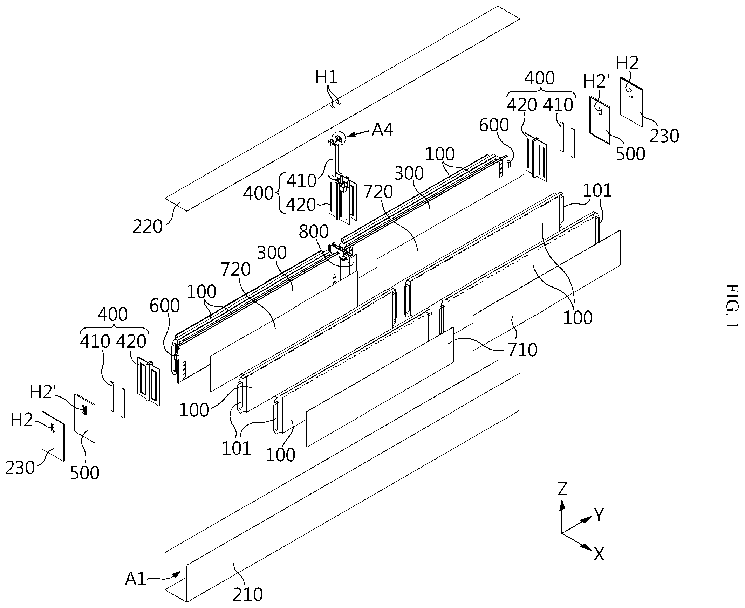

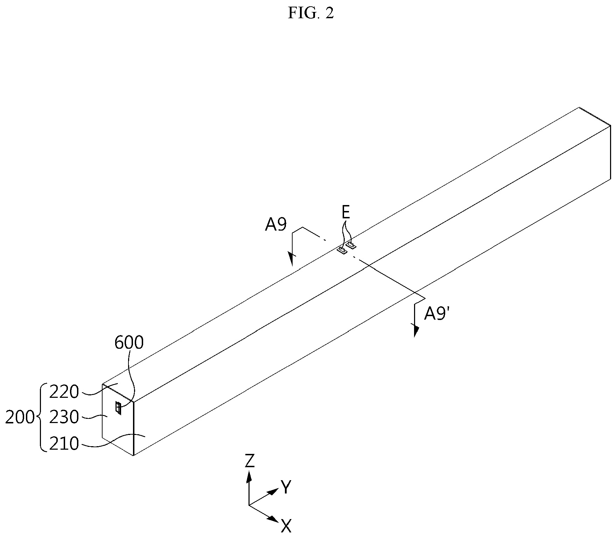

FIG. 1 is an exploded perspective view schematically illustrating a configuration of a cell unit, according to an embodiment of the present disclosure. FIG. 2 is a combined perspective view illustrating the configuration of FIG. 1.

Referring to FIGS. 1 and 2, a cell unit according to the present disclosure includes a pouch-type cell 100 and a unit case 200.

The pouch-type cell 100 that is a secondary battery, in particular, a pouch-type secondary battery, may be configured so that an electrode assembly and an electrolyte are accommodated in an aluminum pouch casing and an outer peripheral portion is sealed. A plurality of pouch-type cells 100 are provided in the cell unit. For example, eight pouch-type cells 100 may be provided in one cell unit. However, the number of pouch-type cells 100 included in the cell unit may be changed in various ways.

In the pouch-type cell 100, two electrode leads 101, that is, a positive electrode lead and a negative electrode lead, may protrude from one side or from both sides. In this case, a cell in which two electrode leads 101 are provided on the same side surface may be referred to a unidirectional cell, and a cell in which two electrode leads 101 are provided on different side surfaces may be referred to as a bidirectional cell. In FIG. 2, the electrode leads 101 are respectively located on the front side and the rear side of each pouch-type cell 100. This configuration of the pouch-type battery cell is already known at the time of filing the present application, and thus, a detailed description thereof will be omitted.

The unit case 200 has an inner space in which the plurality of pouch-type cells 100 are accommodated. For example, an empty space A1 may be formed in the unit case 200, as shown in FIG. 1, and the pouch-type cells 100 may be accommodated in the empty space that is an inner receiving space.

Furthermore, the unit case 200 may be simply formed with a thickness (e.g., 1 to 3 mm) that is less than that of a module case included in a general battery module. Also, the unit case 200 may include a smaller number of pouch-type cells 100 than the general module case. For example, one module case may include tens of pouch-type cells 100, whereas the unit case 200 may include a smaller number of, for example, 10 or less, pouch-type cells 100. Accordingly, the cell unit according to the present disclosure may be configured as a smaller unit than the general battery module.

The unit case 200 may be formed of a metal material to ensure mechanical rigidity above a certain level and improve cooling performance. In particular, the unit case 200 may be formed of an aluminum material.

In the inner space of the unit case 200, the pouch-type cells 100 are accommodated while being erected. That is, the pouch-type cells 100 may be erected on a bottom surface of the unit case 200 so that some of edge portions (sealing portion) surrounding a receiving portion is located on an upper side and a lower side of the receiving portion. In this case, a lower edge portion of the pouch-type cells 100 may contact the bottom surface of the unit case 200, and the receiving portion of the pouch-type cells 10C is located in a horizontal direction, in particular, a left-right direction (X axis direction). To this end, the cell unit may be formed in an appropriate shape to maintain an erected state of the pouch-type cells 100.

In the present specification, unless otherwise described, the X axis direction may refer to the left-right direction, a Y axis direction may refer to a front-back direction, and a Z axis direction may refer to an up-down direction.

The cell unit according to the present disclosure includes a venting member 300.

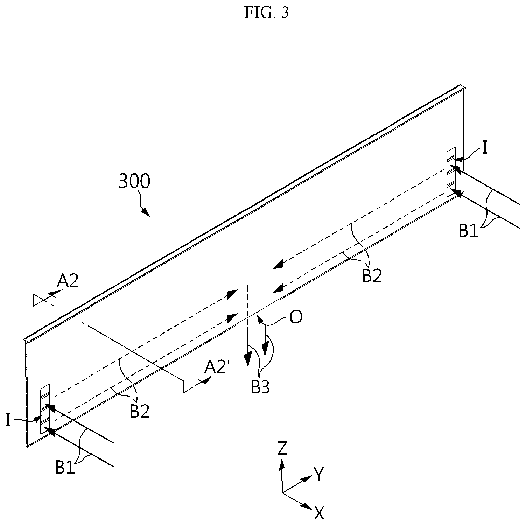

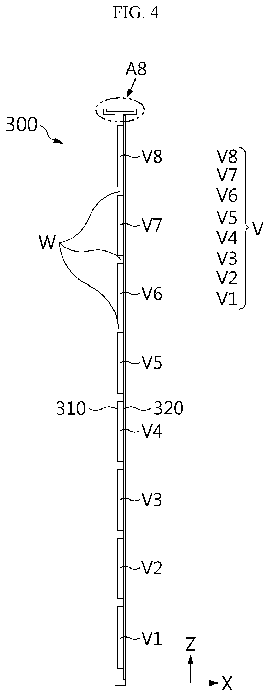

The venting member 300 is located in the inner space A1 of the unit case 200, like the pouch-type cells 100. In particular, the venting member 300 is located adjacent to the pouch-type cells 100. The venting member 300 is configured so that venting gas is introduced into the venting member 300 and is discharged to the outside, which will be described in more detail with further reference to FIGS. 3 and 4.

FIG. 3 is a perspective view schematically illustrating a configuration of the venting member 300, according to an embodiment of the present disclosure. FIG. 4 is a cross-sectional view schematically illustrating a configuration of the venting member 300, according to an embodiment of the present disclosure. For example, FIG. 4 may be a cross-sectional view taken along line A2-A2' of FIG. 3.

Referring to FIGS. 3 and 4, the venting member 300 is configured so that venting gas is introduced, flows through an inner space, and is discharged to the outside. In particular, the venting member 300 may have an empty space therein, as shown in FIG. 4. The empty space may function as a venting passage. Accordingly, when venting gas is discharged from the pouch-type cell 100, the venting gas flows through the venting passage V of the venting member 300 and then may be discharged to the outside. In more detail, referring to FIG. 3, venting gas discharged from the pouch-type cell 100 is introduced into the inner space, that is, the venting passage V, of the venting member 300, as marked by an arrow B1. The venting gas introduced into the venting member 300 flows through the venting passage V as marked by an arrow B2, and then is discharged to the outside of the venting passage V as marked by an arrow B3.

According to this embodiment of the present disclosure, thermal runaway propagation may be effectively prevented. For example, when thermal runaway occurs in the pouch-type cell 100 located adjacent to the venting member 300 and thus venting gas, heat, or flame is generated, the venting gas or flame may be introduced into the venting member 300 and may be discharged along a determined path. Accordingly, the venting gas or flame may be blocked or suppressed from traveling toward other normal pouch-type cells 100. Hence, in this case, thermal runaway propagation between cells may be prevented from occurring or spreading.

Furthermore, according to an aspect of the present disclosure, a smaller number of pouch-type cells 100 than that in a general battery module may be included in the unit case to constitute the cell unit. Accordingly, a plurality of battery cells (pouch-type cells) included in a battery pack may be protected with a small unit. In particular, thermal runaway propagation between the pouch-type cells 100 included in different cell units may be more effectively prevented.

Also, according to the embodiment, discharge of venting gas or flame may be controlled. In particular, in the embodiment, venting gas may be rapidly discharged, and effective directional venting of appropriately guiding a direction of the venting gas may be achieved. Accordingly, in the embodiment, explosion of an upper element including the pouch-type cells 100, the cell unit, a battery module, or a battery pack, may be prevented and propagation of heat or flame between cells or modules may be suppressed.

In order to ensure the effect of blocking heat or flame, the venting member 300 may have a larger area than the pouch-type cell 100 to completely cover the pouch-type cell 100 in the horizontal direction. For example, the venting member 300 may be formed to be higher than the pouch-type cell 100 in the up-down direction and longer than the pouch-type cell 100 in the front-back direction.

Because the venting member 300 may be exposed to heat, gas, or flame, the venting member 300 may be formed of a material having excellent heat resistance. Also, the venting member 300 may be formed of a material having high thermal conductivity, to ensure excellent cooling performance. Also, the venting member 300 may be formed of a material having excellent formability, processability, assemblability, and rigidity. For example, the venting member 300 may include a metal material such as aluminum, steel, or stainless steel (SUS), a ceramic material such as mica, or a highly heat-resistance polymer material. However, the present disclosure is not limited to a specific material of the venting member 300.

The unit case 200 includes a lower case 210 and an upper case 220, as shown in FIGS. 1 and 2.

The lower case 210 may be formed to have a space in which the battery cell 100 is accommodated. In particular, the lower case 210 is formed by bending a plate-shaped member, as shown in FIG. 1. For example, the lower case 210 may be formed by bending an aluminum plate into a U-shape. When the lower case 210 is formed in a U-shape, the lower case 210 may be referred to as a U-frame. Furthermore, the lower case 210 may include a central portion that functions as a bottom surface, and a left end and a right end that are vertically bent to respectively form a left wall and a right wall. In this case, an upper end, a front end, and a rear end of the lower case 210 may be open.

The upper case 220 is coupled to an upper open portion of the lower case 210. In particular, when the lower case 210 is formed by bending a plate-shaped member as in the above embodiment, the lower case 210 may include the upper open portion, a front open portion, and a rear open portion. In this case, the upper case 220 may be coupled to the upper open portion of the lower case 210 to cover or seal the upper open portion. In particular, the upper case 220 may be formed in a plate shape, as shown in FIG. 1. For example, the upper case 220 may be formed of an aluminum plate.

According to this embodiment of the present disclosure, the unit case 200 may have a simple structure and may be easily manufactured. Also, in this case, the unit case 200 may have a light weight and a small thickness. Accordingly, a weight of a battery pack or a battery module may be reduced and energy density may be improved. Also, in this case, a structure for protecting the pouch-type cells 100 may be simple.

In the embodiment, the unit case 200 may further include an end case 230.

The end case 230 may be coupled to each of the front open portion and the rear open portion of the lower case 210. In particular, when the lower case 210 includes both the front open portion and the rear open portion, one cell unit may include two end cases 230. In this case, the end case 230 coupled to the front open portion may be referred to as a front case, and the end case 230 coupled to the rear open portion may be referred to as a rear case. Also, the end case 230 may also be formed in a plate shape. In this case, the end case 230 may be referred to as an end plate. Also, the end case 230 may be formed of a metal material such as aluminum.

According to this embodiment of the present disclosure, a case structure for protecting the pouch-type cells 100 accommodated therein may be simple. In particular, according to the embodiment, a configuration of covering the pouch-type cells 100 accommodated therein in all directions, that is, in the up-down direction, the front-back direction, and the left-right direction may be easily provided.

As such, when a plurality of sub-components are included in one unit case 200, the sub-components may be welded to each other. For example, edges of the lower case 210 and the upper case 220 may be welded to each other to form an adhesive portion. Also, an edge of the end case 230 may be welded to the lower case 210 and the upper case 220 to form an adhesive portion. In particular, because an adhesive portion between sub-components may be formed in a linear shape, a welded portion may also be formed in a linear shape.

The welded sub-components may be formed of the same material. For example, the lower case 210, the upper case 220, and the end case 230 may be formed of an aluminum material. According to this embodiment, weldability between sub-components may be improved. Accordingly, a coupling force of the unit case 200 may be stably guaranteed, and assemblability of the unit case 200 may be improved.

The cell unit according to the present disclosure may further include a bus bar assembly 400.

The bus bar assembly 400 may be electrically connected to the electrode leads 01 of the pouch-type cells 100 accommodated in the inner space of the unit case 200. In particular, the bus bar assembly 400 may electrically connect the plurality of pouch-type cells 100 in series and/or in parallel. Also, the bus bar assembly 400 may be connected to the electrode leads 101 of the plurality of pouch-type cells 100, to structurally fix the plurality of pouch-type cells 100 to each other.

The bus bar assembly 400 may be provided at a portion of the pouch-type cells 00 where the electrode lead 101 is located, in order to be connected to the electrode lead 101. For example, referring to an embodiment of FIG. 1, because the electrode leads 101 of the pouch-type cells 100 protrude from a front side and a rear side, the bus bar assemblies 400 may be respectively located on the front side and the rear side of the pouch-type cells 100. In particular, a plurality of bus bar assemblies 400 may be included in one cell unit, as shown in FIG. 1. Furthermore, when cell stacks stacked in the left-right direction (X axis direction) are arranged in multiple columns in the front-back direction (Y axis direction), two bus bar assemblies 400 may be located at front and rear ends for each cell column. Accordingly, when cell stacks are arranged in two columns, four bus bar assemblies may be located in the front-back direction.

The bus bar assembly 400 may include a bus bar terminal 410 and a bus bar frame 420.

The bus bar terminal 410 may be formed of an electrically conductive metal material such as copper or aluminum. For example, the bus bar terminal 410 may be formed in a bar shape formed of copper. The bus bar terminal 410 may electrically connect the pouch-type cells 100 to the inside or the outside of the cell unit. Furthermore, the bus bar terminal 410 may fixedly directly contact the electrode lead 101. In this case, in order to maintain a fixed contact state, the bus bar terminal 410 and the electrode lead 101 may be welded to each other.

The bus bar frame 420 for supporting the bus bar terminal 410 may be formed of an electrically insulating material, in order to be insulated from the electrode lead 101 or the bus bar terminal 410. For example, the bus bar frame 420 may be formed of a plastic material. The bus bar frame 420 may be formed in a substantially plate shape. In particular, the bus bar frame 420 may be erected in a vertical direction so that two wide surfaces are in the front-back direction (Y axis direction), that is, face the stack of the pouch-type cells 100, as shown in FIG. 1. When the pouch-type cell 100 is erected so that the two wide surfaces of the pouch-type cell 100 are in the left-right direction, the bus bar frame 420 may be erected so that two wide surfaces are in substantially the front-back direction. In this case, the pouch-type cell 100 and the bus bar frame 420 may be erected to be substantially perpendicular to each other.

A part of the bus bar frame 420, in particular, the bus bar terminal 410, may be exposed to the outside of the unit case 200, to function as a terminal of the cell unit. For example, an upper end of the bus bar terminal 410 of the bus bar assembly 400 located at the center in FIG. 1 may pass through the unit case 200 to be exposed to the outside. To this end, the unit case 200, for example, the upper case 220, may include a terminal hole H1. In FIG. 2, an exposed portion of the bus bar terminal 410 exposed trough the terminal hole H1 of the unit case 200 may function as a unit terminal E. Furthermore, at least two unit terminals E may be provided in one cell unit, and may respectively function as a positive electrode terminal and a negative electrode terminal. The unit terminal E may electrically connect one cell unit to another external element. For example, the cell unit may be electrically connected to another cell unit, through the unit terminal E. In this case, a separate connection member may be provided in the unit terminal E, to electrically connect cell units in series and/or in parallel. Also, the unit terminal E may be connected to a terminal of a battery module or a battery pack including the cell unit, to transmit charging/discharging power.

According to this embodiment of the present disclosure, an electrical connection structure of the cell unit may be simple.

In the embodiment, the bus bar frame 420 may be located between the pouch-type cells 100 and the end case 230. Furthermore, in the cell unit, a plurality of pouch-type cells 100 are stacked in a horizontal direction, for example, the left-right direction (X axis direction), to form a cell array. In this case, the bus bar frame 420 may have an area enough to entire cover a front side or a rear side of the cell array. Alternatively, the bus bar frame 420 may have a shape and a size similar to those of the end case 230, to entirely cover an inner side of the end case 230.

Furthermore, the bus bar frame 420 may be accommodated in the inner space formed by the lower case 210 and the upper case 220 so that ends contact inner surfaces of the lower case 210 and the upper case 220. For example, in an embodiment of FIG. 1, the bus bar frame 420 may be formed in a plate shape erected in the up-down direction, and a lower edge and left and right edges of the bus bar frame 420 may continuously contact an inner surface of the lower case 210 having a U frame shape. Also, an upper edge of the bus bar frame 420 may continuously contact an inner surface, that is, a lower surface, of the upper case 220.

According to this embodiment of the present disclosure, coupling between the bus bar frame 420 and the unit case 200 may be more stably ensured. Also, in this case, because a space between the bus bar frame 420 and the unit case 200 is sealed, venting gas or flame generated from the pouch-type cell 100 may be prevented from leaking toward the end case 230.

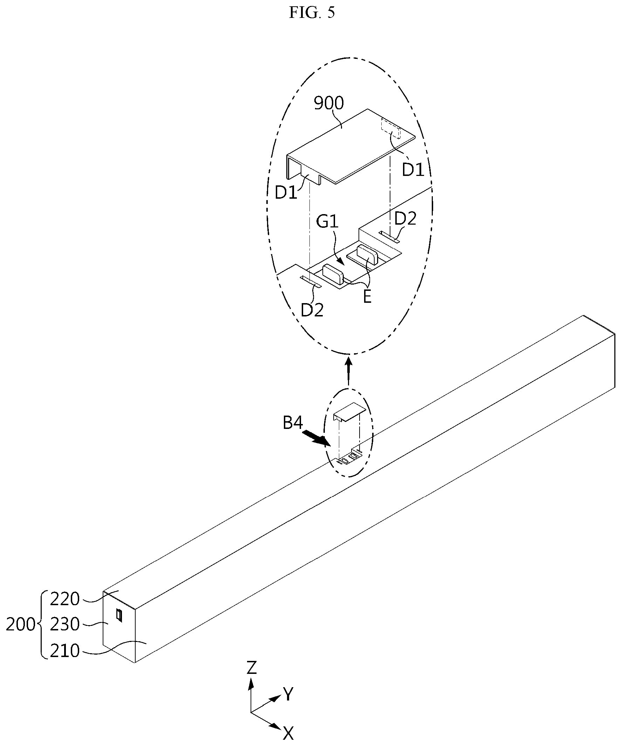

In the cell unit according to the present disclosure, a position or a shape of the unit terminal E and a structure of a portion where the unit terminal E is provided may be changed in various ways, which will be described in more detail with reference to FIGS. 5 to 7.

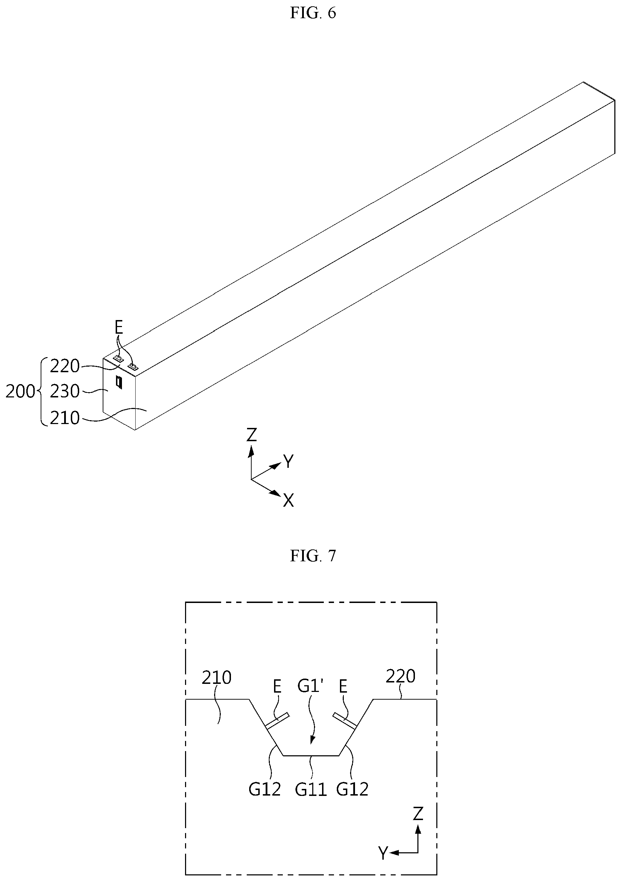

FIGS. 5 and 6 are perspective views schematically illustrating a configuration of a cell unit, according to different embodiments of the present disclosure. Also, FIG. 7 is a side view schematically illustrating a configuration of a portion of a cell unit, according to still another embodiment of the present disclosure. For example, FIG. 7 may be a view schematically illustrating a modified example of the configuration of FIG. 5, viewed in a direction of an arrow B4.

First, referring to FIG. 5, the unit terminal E may be provided in a concave portion of the unit case 200. For example, a concave portion G1 that is concave downward may be formed in a central portion of the upper case 220. In this case, an upper side and a left side of the concave portion G1 may be open. The unit terminal E may be located in the concave portion G1 of the upper case 220.

According to this embodiment, an extent to which the unit terminal E protrudes outward beyond the unit case 200 may be reduced or eliminated. For example, the unit terminal E may be formed in the concave portion G1 of the upper case 220, to reduce an extent to which the unit terminal E protrudes upward or prevent the unit terminal E from protruding.

According to this embodiment of the present disclosure, exposure of the unit terminal E to external impact or a foreign material may be reduced, thereby improving the performance of protecting the unit terminal E.

Also, the cell unit according to the present disclosure may further include a terminal cover 900, as shown in FIG. 5. The terminal cover 900 may surround an outer surface of the unit terminal E. For example, the terminal cover 900 may cover an upper side and/or a left side of the unit terminal E located in the upper case 220.

Also, the terminal cover 900 may have a coupling structure to be coupled to the unit case 200. For example, the terminal cover 900 may be inserted into the unit case 200. In a more specific example, referring to an embodiment of FIG. 5, the terminal cover 900 may include a fastening protrusion D1 protruding downward. The upper case 220 may include a fastening hole D2 corresponding to the fastening protrusion D1 of the terminal cover 900.

In this configuration, the fastening protrusion D1 of the terminal cover 900 may be inserted into the fastening hole D2 of the upper case 220, so that the terminal cover 900 is coupled to the upper case 220.

In particular, as described above, when the concave portion G1 is be formed in the unit case 200, to which the terminal cover 900 is coupled, for example, the upper case 220, and the unit terminal E is located in the concave portion G1, a configuration of coupling the terminal cover 900 may be more easily implemented. Furthermore, the terminal cover 900 may include a flat outer surface, and the outer surface may be located substantially parallel to an outer surface of the unit case 200, and further, located on substantially the same plane.

According to this embodiment of the present disclosure, not only the unit terminal E but also the unit terminal 900 may not protrude much outward beyond the unit case 200, for example, the upper case 220. Also, in this embodiment, because a structure of the terminal cover 900 may be simplified, the terminal cover 900 may be easily manufactured and assembled.

Next, the unit terminal E may be located at an end portion of the cell unit in a longitudinal direction, as shown in FIG. 6. That is, in an embodiment of FIGS. 2 and 5, the unit terminal E is located substantially at the center in the front-back direction (Y axis direction) that is the longitudinal direction of the cell unit, whereas in an embodiment of FIG. 6, the unit terminal E is located at an end, in particular, a front end in the longitudinal direction of the cell unit.

According to this embodiment of the present disclosure, because the unit terminal E is located at an edge of the cell unit, a configuration of connecting the unit terminal E may be more easily implemented. A plurality of cell units are stacked, and in this case, a stacking direction is horizontal and perpendicular to the longitudinal direction of the cell unit. In this case, as shown in FIG. 6, when the unit terminal E is located at an end in the longitudinal direction, such as a front end of the cell unit, a process of connecting the unit terminals E may be more easily performed.

Next, referring to an embodiment of FIG. 7, like in an embodiment of FIG. 5, the unit terminal E may be provided in a concave portion G1'. However, in the embodiment of FIG. 7, unlike in the embodiment of FIG. 5, the unit terminal E may be located on a side surface, instead of a bottom surface, of the concave portion G1'.

In more detail, the concave portion G1' may be provided in the upper case 220, may be concave downward, and may include a bottom surface G11 and a side surface G12. In this case, the unit terminal E may be located on the side surface G12 of the concave portion G1'. In particular, the side surface G12 of the concave portion G1' may be inclined. That is, the side surface G12 of the concave portion G1' may not be perpendicular to the bottom surface G11, and may be formed to have an acute angle or an obtuse angle. In this case, the side surface G12 of the concave portion G1' may be an inclined surface. In this configuration, the unit terminal E may be located on the inclined surface of the concave portion G1'.

According to this embodiment of the present disclosure, a height to which the unit terminal E protrudes outward may be reduced without reducing a length of the unit terminal E. Accordingly, exposure of the unit terminal E to the outside may be more effectively suppressed. Furthermore, in this case, a depth of the concave portion G1' at which the unit terminal E is located may not be great. Accordingly, reduction of the inner space of the unit case 200 due to the formation of the concave portion G1' may be minimized. Hence, energy density of the cell unit may be improved, and interference between elements in the unit case 200 such as the pouch-type cell 100 or the bus bar assembly 400 and the unit case 200 may be reduced.

Although the unit terminal E is located in the upper case 220 in various embodiments of FIGS. 2, and 5 to 7, the unit terminal E may be located in portions other than the upper case 220. For example, the unit terminal E may be located in the end case 230.

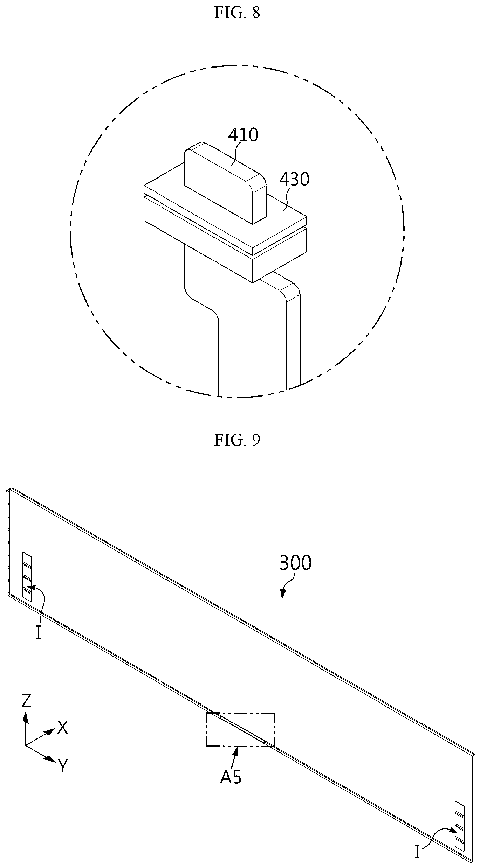

The bus bar assembly 400 may include a terminal sealing member 430, which will be described in more detail with reference to FIG. 8.

FIG. 8 is an enlarged perspective view schematically illustrating some elements of a cell unit, according to an embodiment of the present disclosure. For example, FIG. 8 may be an enlarged view illustrating a portion A4 of FIG. 1.

Referring to FIGS. 1 and 8, the bus bar assembly 400 may include the terminal sealing member 430 partially surrounding the bus bar terminal 410 including the unit terminal E. In particular, the terminal sealing member 430 may be configured to seal the terminal hole H1 of the unit case 200 while closely contacting an outer circumferential surface of the bus bar terminal 410. That is, the terminal sealing member 430 may seal a remaining portion of the terminal hole H1 except for a portion occupied by the bus bar terminal 410. The terminal sealing member 430 may be formed of a material that has elasticity and electrical insulation. For example, the terminal sealing member 430 may be formed of a silicone or rubber material. Also, the terminal sealing member 430 may include a material for improving heat resistance. For example, the terminal sealing member 430 may include a ceramic coating layer having heat resistance formed on an outer surface formed of a silicone material.

According to this embodiment of the present disclosure, venting gas or the like generated in a situation such as thermal runaway may be prevented from leaking toward the unit terminal E. Accordingly, in this case, more effective venting control may be provided.

The cell unit according to the present disclosure may further include an insulating cover 500, as shown in FIG. 1. The insulating cover 500 may be formed of an electrically insulating material such as rubber, plastic, or ceramic. In particular, the insulating cover 500 may be located between the pouch-type cells 100 and the end case 230. Furthermore, because the bus bar assembly 400 may be provided at a portion where the electrode lead 101 of the pouch-type cell 100 is located, the insulating cover 500 may be located between the bus bar assembly 400 and the end case 230.

According to this embodiment, even when the end case 230 is formed of an electrically conductive material such as aluminum, insulation between the end case 230 and the electrode lead 101 may be ensured. Also, according to the embodiment, because the insulating cover 500 is located close to the end case 230, leakage of venting gas or the like toward the end case 230 may be suppressed. To this end, the insulating cover 500 may be formed to have a size or a shape similar to that of the end case 230.

Also, the cell unit according to the present disclosure may further include a connector 600, as shown in FIGS. 1 and 2.

The connector 600 may be provided on a side of the cell unit, to transmit and/or receive a signal or data between the cell unit and an external element. For example, the connector 600 may be provided to transmit information about electrical characteristics, for example, a voltage or current, of the pouch-type cells 100 included in the cell unit.
In another example, the connector 600 may be provided to transmit information about a temperature inside and outside the cell unit to the outside. In this case, the cell unit may separately include a temperature sensor. For example, the connector 600 may be a path through which temperature information measured trough a thermistor provided in the inner space of the unit case 200 is transmitted to another external element. In particular, the connector 600 may be connected to a control unit such as a battery management system (BMS) located outside the cell unit through a connection cable or the like. In this case, information of the cell unit may be transmitted to the BMS through the connector 600.

In the embodiment including the connector 600, the connector 600 may be exposed to the outside of the unit case 200. To this end, the unit case 200, for example, the end case 230, may include a connecting hole H2 through which the connector 600 passes, as shown in FIG. 1. Also, when the insulating cover 500 is located on an inner surface of the end case 230, the insulating cover 500 may also include another connecting hole, that is, an insulating connecting hole H2', formed at a position corresponding to the connecting hole H2, as shown in FIG. 1. In this case, the connector 600 located inside the unit case 200 may sequentially pass through the insulating connecting hole H2' and the connecting hole H2 and may be exposed to the outside of the unit case 200.

Also, in the embodiment, a connecting sealing member may be provided in the insulating connecting hole H2' and the connecting hole H2 through which the connector 600 passes, to more reliably prevent leakage of venting gas or the like.

Also, the cell unit according to the present disclosure may further include a pad member 710, as shown in FIG. 1.

The pad member 710 may be formed in a plate shape, and may be located between a wide surface of the cell unit and the lower case 210. Furthermore, the pad member 710 may be located parallel to the pouch-type cell 100 while being erected in the up-down direction. In particular, the plurality of pouch-type cells 100 may be stacked in the left-right direction in the inner space of the unit case 200. In this case, the pad member 710 may be located between an inner surface of a side wall of the lower case 210 and an outermost cell.

Because the pad member 710 is formed in a substantially plate shape but has a thickness of a certain level or more, an outer surface of the pouch-type cell 100 may be prevented from directly contacting an inner surface of the unit case 200. Furthermore, the pad member 710 may be configured to absorb swelling of the pouch-type cell 100. Also, the pad member 710 may be formed of a material having elasticity and/or electrical insulation. For example, the pad member 710 may be formed of a polyurethane material.

According to this embodiment of the present disclosure, even when swelling occurs in the pouch-type cell 100, the pad member 710 absorbs the swelling, and thus, damage, breakage, or deformation of the pouch-type cells 100 or the unit case 200 may be prevented. Also, according to the embodiment, even when the unit case 200 is formed of an electrically conductive material such as aluminum, electrical insulation between the pouch-type cells 100 and the unit case 200 may be ensured.

Also, the cell unit according to the present disclosure may further include a sheet member 720, as shown in FIG. 1.

The sheet member 720 may be formed in a plate shape, like the pad member 710, but may be thinner than the pad member 710. Also, the sheet member 720 may be located parallel to the pouch-type cell 100 while being erected. In particular, the sheet member 720 may be located between the pouch-type cell 100 and the venting member 300. The sheet member 720 may prevent the pouch-type cell 100 from directly contacting the venting member 300. Furthermore, the sheet member 720 may be formed an electrically insulating material.

According to this embodiment of the present disclosure, even when the venting member 300 is formed of an electrically conductive material such as aluminum, electrical insulation between the pouch-type cell 100 and the venting member 300 may be stably ensured.

The venting member 300 may be formed in a plate shape. In this case, the venting member 300 may include two wide surfaces. For example, as shown in FIGS. 1 and 3, the venting member 300 may be formed in an erected plate shape. In this case, the two wide surfaces of the venting member 300 may be located in the horizontal direction, for example, the left-right direction (X axis direction).

The venting member 300 may face the pouch-type cell 100 that is adjacent to the venting member 300. That is, the venting member 300 may be located so that at least one of the two wide surfaces faces a wide surface of the pouch-type cell 100. For example, in a state where the venting member 300 is erected so that both surfaces are located in the left-right direction pouch-type cells 100 are located on a left side and a right side of the venting member 300. In particular, in a state where the pouch-type cell 100 is erected so that wide surfaces of a receiving portion face the left side and the right side, the pouch-type cells 100 are located adjacent to the venting member 300.

According to this embodiment of the present disclosure, when the stack is formed by stacking the pouch-type cells 100 and the venting member 300, venting control by the venting member 300 may be effectively performed and a thickness of the stack may be prevented from increasing. That is, in the embodiment, an overall size of the cell unit may not be increased, a dead space may be reduced, and thus, energy density of the cell unit may be further improved.

Also, according to this embodiment, because a distance between the pouch-type cells 100 and the venting member 300 is short, venting gas or the like discharged from the pouch-type cells 100 may be rapidly discharged to the outside through the venting member 300. Also, according to the embodiment, a width of the venting member 300 may be reduced, and the effect of blocking heat or flame with respect to the pouch-type cell 100 that is adjacent may be excellent.

The venting member 300 may contact the inner surface of the unit case 200. For example, upper and lower ends of the venting member 300 may continuously contact a lower surface of the upper case 220 and an upper surface of the lower case 210. Also, front and rear ends of the venting member 300 may contact an inner surface of the end case 230 or the bus bar assembly 400.

According to this embodiment of the present disclosure, venting gas or flame may be prevented from leaking through a gap between the venting member 300 and the unit case 200 or the bus bar assembly 400. Hence, the effect of controlling venting gas or blocking heat/flame may be further improved.

In particular, the venting member 300 is located on a side of one pouch-type cell 100 and the unit case 200 is located on the other side of the pouch-type cell 100.
For example, when the pouch-type cell 100 is located on a right side of the venting member 300, the venting member 300 may be located on a left side and the unit case 200 may be located on the right side. In this case, the left side and the right side of the pouch-type cell 100 may be blocked respectively by the venting member 300 and the unit case 200, thereby suppressing propagation of heat and flame.

Furthermore, an upper end and/or a lower end of the venting member 300 may be wider than other portions.

For example, an upper end of the venting member 300 may be extended to have an extended portion A8 with a width greater than that of other portions in the left-right direction, as shown in FIG. 4. As such, the extended portion formed at the upper end of the venting member 300 may be closely fixed to an inner surface of the unit case 200, for example, a lower surface of the upper case 220.

According to this embodiment of the present disclosure, the venting member 300 may be stably fixed in the inner space of the unit case 200. In particular, when the venting member 300 is formed in a plate shape and is located in the inner space of the unit case 200 while being erected, the venting member 300 may not be inclined to the left or right due to the extended portion A8 of the upper end, and may be accurately erected in a direction perpendicular to the ground. Accordingly, structural stability and assemblability of the cell unit may be improved. Also, according to the embodiment, even when pressure is applied to the venting member 300 in a situation where venting gas or the like is generated, pushing or deformation of the venting member 300 may be minimized.

In particular, both ends of the extended portion of the venting member 300 may protrude outward, for example, upward, beyond other portions. For example, left and right ends of the extended portion A8 of the venting member 300 may protrude upward, as shown in FIG. 4. In this case, an erected state of the venting member 300 may be more effectively prevented from being inclined to the left or right due to an assembly tolerance or the like.

A plurality of pouch-type cells 100 are accommodated in the inner space of the unit case 200. For example, referring to a configuration of FIG. 1, four pouch-type cells 100 may be stacked in the left-right direction (X axis direction) in the inner space of the unit case 200. In this case, in a state where each pouch-type cell 100 is erected in the up-down direction so that wide surfaces of the receiving portion are in the left-right direction, the wide surfaces may be arranged in parallel in the left-right direction to face each other.

In this embodiment, the venting member 300 is located between adjacent pouch-type cells 100. For example, as shown in an embodiment of FIG. 1, the venting member 300 may be located only between two pouch-type cells 100 located at the center from among the four pouch-type cells 100 stacked in the left-right direction. In this case, two pouch-type cells 100 may be stacked on a left side of the venting member 300, and two other pouch-type cells 100 are stacked on a right side of the venting member 300. However, the venting member 300 may be located between all pouch-type cells 100 stacked in the left-right direction.

In this case, openings for introducing venting gas may be located on both sides of the venting member 300. For example, when the venting member 300 is formed in an erected plate shape including a left surface and a right surface, inlets I may be respectively formed in the left surface and the right surface.

According to this embodiment of the present disclosure, more efficient venting control and heat/flame blocking effect may be achieved. That is, one venting member 300 may be in charge of venting for different multiple pouch-type cells 100 located on both sides. Also, the venting member 300 may prevent or suppress transfer of heat, gas, or flame between the different pouch-type cells 100 located on both sides.

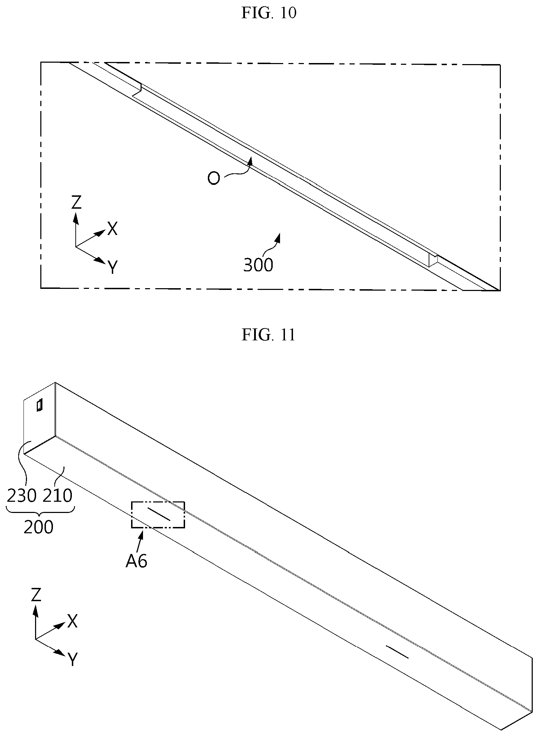

FIG. 9 is a perspective view illustrating the venting member 300 included in a cell unit, viewed from the bottom, according to an embodiment of the present disclosure. Also, FIG. 10 is an enlarged view illustrating a portion A5 of FIG. 9.

Referring to FIGS. 9 and 10 together with the above various drawings, the venting member 300 includes two inlets I and an outlet O. The inlets I and the outlet O communicate with an inner space, that is, the venting passage V, of the venting member 300. In this case, the inlets I and the outlet O are provided at different positions, and are configured to open the venting passage V at different portions.

The inlets I are be formed in a side surface of the venting member 300 facing the pouch-type cell 100. For example, the venting member 300 may be formed in an erected plate shape, and may be located so that a left surface and a right surface face the pouch-type cells 100. In this case, the inlets I may be respectively formed in surfaces, that is, the left surface and the right surface, of the venting member 300 facing the pouch-type cells 100.

Also, the outlet O may be formed in a side surface of the venting member 300 not facing the pouch-type cell 100. For example, when the pouch-type cells 100 are respectively located on a left side and a right side of the venting member 300, the outlet O may be provided in a side portion of the venting member 300 other than the left surface and the right surface. In a more specific example, the outlet O may be provided in a lower edge portion of the venting member 300, as shown in FIGS. 3 and 10.

The inlets are configured so that venting gas or flame generated from the pouch-type cell 100 is introduced into the venting passage V. Accordingly, the inlets I may be exposed to an inner space of the unit case 200 in which the pouch-type cell 100 is located, and may not be exposed to an outer space of the unit case 200. That is, the inlets I may not be exposed to the outside in a state where the cell unit is assembled, as shown in FIG. 2.

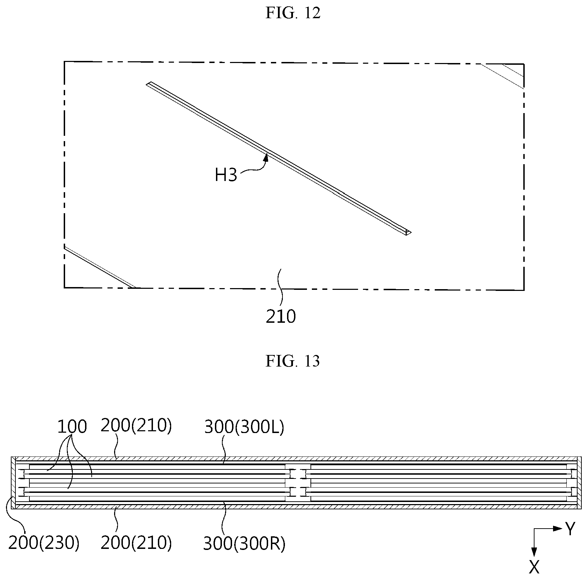

The outlet O is configured so that venting gas or flame flowing through the venting passage V is discharged to the outside. Accordingly, the outlet O may be exposed to the outer space of the unit case 200, which will be described in more detail with reference to FIGS. 11 and 12.

FIG. 11 is a perspective view illustrating a configuration of a cell unit, viewed from the bottom, according to an embodiment of the present disclosure. Also, FIG. 12 is an enlarged view illustrating a portion A6 of FIG. 11.

Referring to FIGS. 11 and 12, the unit case 200 defines an inner space so that most of the pouch-typecells 100 and the venting member 300 accommodated in the inner space are not exposed to the outside. However, a venting hole H3 through which the inner space is open may be formed in a side portion of the unit case 200, for example, a bottom surface of the lower case 210, as shown in FIG. 12. That is, the unit case 200 may include the venting hole H3 formed at a position corresponding to the outlet O of the venting member 300. Furthermore, the unit case 200 may completely surround, in particular, seal the inner space, in which the pouch-type cells 100 and the venting member 300 are accommodated, except for the venting hole H3.

Furthermore, the outlet O of the venting member 300 as shown in FIG. 10 may communicate with the venting hole H3. That is, the outlet O of the venting member 300 may be exposed to the outside through the venting hole H3 of the unit case 200. A portion in the unit case 200 such as the pouch-type cells 100, other than the outlet O of the venting member 300, may not be exposed to the venting hole H3.

According to this embodiment of the present disclosure, venting gas or the like introduced into the inner space, that is, the venting passage V, of the venting member 300 is discharged to the outside of the unit case 200 via the outlet O and the venting hole H3. That is, a configuration of discharging venting gas through the venting member 300 as marked by an arrow in FIG. 3 may be easily implemented. In particular, according to the embodiment, venting gas or flame ejected from the pouch-type cell 100 may be rapidly introduced into the venting member 300. Accordingly, when venting gas is generated in the cell unit, internal pressure may be rapidly lowered and thus, explosion or the like may be prevented. Also, because heat in the cell unit is discharged to the outside, acceleration of thermal runaway or the risk of fire may be reduced.

Also, according to the embodiment, venting gas or flame discharged from the pouch-type cells 100 is directly discharged to the outside of the unit case 200 through the venting member 300. Accordingly, other pouch-type cells 100 included in the unit case 200 may be prevented or minimized from contacting or being affected by venting gas or flame.

FIG. 13 is a top cross-sectional view schematically illustrating a configuration of a cell unit, according to another embodiment not part of the present invention.

Referring to FIG. 13, the venting member 300 may be attached to an inner surface of the unit case 200. In more detail, one or more pouch-type cells 100 may be located in the unit case 200 while being erected long in the front-back direction (Y axis direction). Furthermore, in an embodiment of FIG. 13, a plurality of pouch-type cells 100 may be arranged in the left-right direction (X axis direction) and the front-back direction (Y axis direction) to form a cell array.

In this case, the venting member 300 may be attached to an inner surface of the unit case 200. That is, the venting member 300 may be located between the unit case 200 and the pouch-type cell 100. Furthermore, when the pouch-type cell 100 is accommodated in the unit case 200 while being erected in the vertical direction, the venting member 300 may be attached to an inner surface of the unit case 200 while being erected. In this embodiment, the inlet I of the venting member 300 may be formed only in one surface. For example, when the venting member 300 is attached to an inner surface of a left wall of the unit case 200, the inlet I may be formed only in a right surface facing the pouch-type cell 100 and may not be formed in a left surface facing the unit case 200.

According to this embodiment of the present disclosure, because the venting member 300 is provided in the unit case 200, the unit case 200 may be protected from venting gas, flame, or heat, and the pouch-type cell 100 may be more effectively protected from external impact. Also, according to the embodiment, because venting gas, flame, or heat is blocked by the venting member 300 from directly moving toward the unit case 200, venting gas or flame may be more effectively prevented from being discharged or moving in an unintended direction, for example, to a gap of the unit case 200. Accordingly, in the embodiment, the effect of suppressing heat propagation may be further improved. Also, according to the embodiment, when a plurality of pouch-type cells 100 are stacked, the venting member 300 may not be located therebetween. Accordingly, the cell array may be more easily assembled.

Also, the venting members 300 may be located on both sides of the pouch-type cell 100 accommodated in the unit case 200.

For example, referring to the embodiment of FIG. 13, a plurality of pouch-type cells 100 may be stacked in the left-right direction (X axis direction) in the unit case 200. The venting members 300 may be located on left and right sides of the cell stack. In FIG. 13, the venting member 300 located on the left side is denoted by 300L, and the venting member 300 located on the right side is denoted by 300R. That is, the venting members 300 may be located on both sides of the cell array in a stacking direction. In another example, when only one pouch-type cell 100 is accommodated in the unit case 200, different venting members 300 may be located on both sides of left and right receiving portions of the one pouch-type cell 100.

Also, a plurality of pouch-type cells 100 may be located in the front-back direction, that is, a longitudinal direction of the pouch-type cell 100. For example, referring to the embodiment of FIG. 13, cell stacks formed by being stacked in the left-right direction may be arranged in multiple columns, for example, two columns, in the front-back direction (Y axis direction). In this case, one venting member 300 may be located outside the same side surface of different cell columns. For example, in the embodiment of FIG. 13, the left member 300L may be commonly located on a left side of the two cell columns, and the right member 300R may be commonly located on a right side of the two cell columns. In another example, a different venting member 300 may be located for each cell column.

According to this embodiment of the present disclosure, because the venting members 300 are located outside both sides of the pouch-type cells 100, venting control by the venting member 300 may be more reliably performed. Also, venting gas or the like may be more reliably prevented from leaking to an unintended portion of the unit case 200. Also, because both sides of the pouch-type cells 100 are protected by the venting members 300, the effect of protecting the pouch-type cells 100 may be further improved.

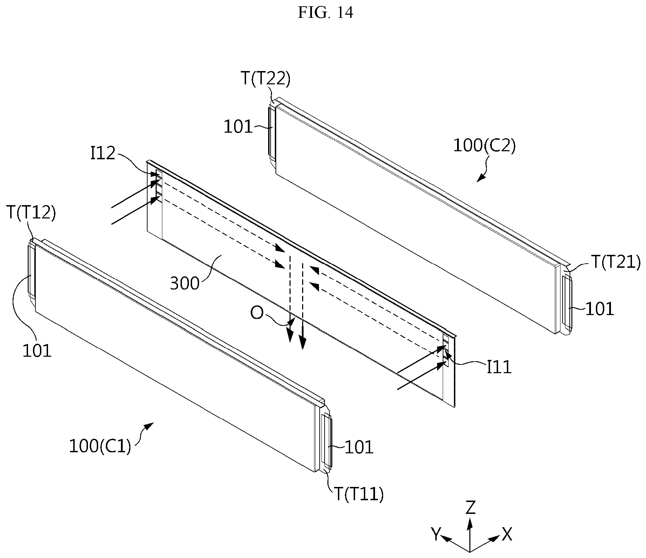

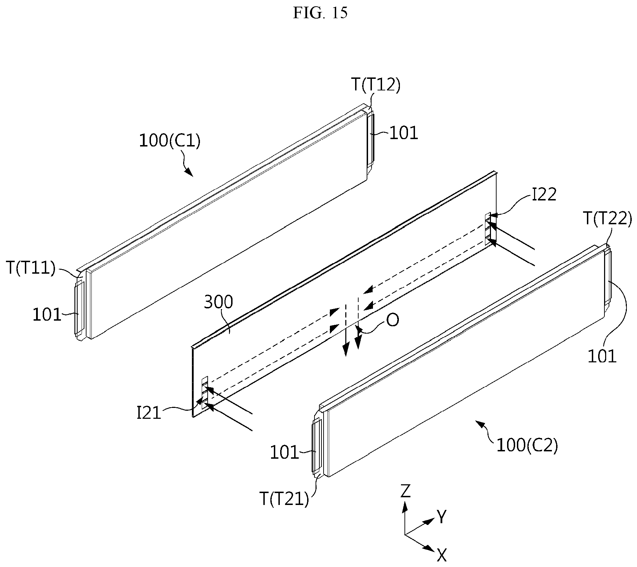

The venting member 300 may include the 2- inlets I formed in a portion facing a terrace portion of the pouch-type cells 100 that is adjacent to the venting member 300, which will be described in more detail with reference to FIGS. 14 and 15.

FIGS. 14 and 15 are exploded perspective views illustrating some elements of a cell unit, viewed from different directions, according to an embodiment of the present disclosure.

Referring to FIGS. 14 and 15, one venting member 300 is located between two pouch-type cells 100. In more detail, a first cell C1 may face a left surface of the venting member 300, and a second cell C2 may face a right surface of the venting member 300. Each pouch-type cell 100 may include a terrace portion T. The terrace portion T may be a portion where the electrode lead 101 protrudes, from among sealing portions surrounding a receiving portion in the pouch-type cell 100.

In this embodiment, referring to FIG. 14, the venting member 300 includes first inlets I11, I12 formed at front and rear ends of a left surface facing terrace portions T11, T12 of the first cell C1. Next, referring to FIG. 15, the venting member 300 may include second inlets I21, I22 formed at front and rear ends of a right surface facing terrace portions T21, T22 of the second cell C2.

According to this embodiment of the present disclosure, when venting gas or the like is discharged from the pouch-type cell 100, the venting gas may be more rapidly introduced into the venting member 300. That is, with the pouch-type battery cells, when internal pressure increases, rupture is likely to occur on the terrace portion T where the electrode lead 101 is located. In particular, as the pouch-type cells 110 are stacked in the horizontal direction while being erected, an upper sealing portion and a lower sealing portion of the pouch-type cell 100 may be folded for a reason such as volume reduction. Accordingly, when venting gas is ejected from the pouch-type cell 100, the venting gas is likely to be ejected to the terrace portion T from among several sealing portions. In this case, when the inlets I of the venting member 300 are located adjacent to the terrace portion T, the venting gas ejected into the terrace portion T may be more rapidly introduced into an inner space of the venting member 300. Also, in this case, venting gas in an inner space of the unit case 200 may be suppressed from flowing through a portion other than the venting member 300 as much as possible, and thus, a problem caused by the venting gas, for example, heating another portion of the pouch-type cell 100 or heating another pouch-type cell 100, may be prevented.

The venting member 300 includes two inlets I corresponding to one pouch-type cell 100. For example, as shown in FIG. 14, two inlets, that is, the first front inlet I11 and the first rear inlet I12, are located to correspond to the first cell C1. Also, referring to FIG. 15, two inlets, that is, the second front inlet I21 and the second rear inlet I22, are located to correspond to the second cell C2.

Furthermore, when the terrace portions T are located at two or more portions of one pouch-type cell 100, a plurality of inlets I may also be formed. In particular, when the electrode leads 101 protrude in both directions, for example, in the front-back direction, in the pouch-type cell 100, the terrace portions T may be respectively located on a front side and a rear side of the pouch-type cell 100. For example, the front terrace portion T11 and the rear terrace portion T12 may be provided on a front side and a rear side of the first cell C1. In this case, the venting member 300 may include two first inlets I11, I12 on front and rear sides of the left surface to correspond to the two terrace portions T11, T12. Also, the venting member 300 may include two second inlets I21, I22 on front and rear sides of the right surface to face the front terrace portion T21 and the rear terrace portion T22 of the second cell C2. That is, the venting member 300 may include two inlets that are spaced apart from each other in the front-back direction that is a longitudinal direction in which the electrode leads 101 of the pouch-type cell 100 are located at both ends.

As such, where two inlets I are formed to correspond to one pouch-type cell 100, the outlet O is formed between the two inlets I. For example, in an embodiment of FIG. 14, the venting member 300 may include the outlet O formed between two first inlets, that is, the first front inlet I11 and the first rear inlet I12. In particular, the outlet O may be located at a central portion the venting member 300 between two first inlets I11, I12 that are spaced apart from each other in the front-back direction (Y axis direction). The outlet O communicates with the two first inlets I11, I12 so that a fluid introduced into the venting passage V through the two first inlets I11, I12 is discharged to the outside of the venting member 300.

Also, referring to an embodiment of FIG. 15, the outlet O may be formed between two second inlets, that is, the second front inlet I21 and the second rear inlet I22. The outlet O communicates with the two second inlets I21, I22 so that a fluid introduced into the venting passage V through the two second inlets I21, I22 is discharged to the outside of the venting member 300.

Furthermore, one outlet O may commonly communicate with the first inlets I11, I12 and the second inlets I21, I22. That is, the outlet O of FIG. 14, that is, the outlet O communicating with the first inlets I11, I12, may be the outlet O communicating with the second inlets I21, I22 of FIG. 15.

In this embodiment, the outlet O is located between two inlets I, and may be located in a receiving portion, in particular, a central portion, of the corresponding pouch-type cell 100. In this case, when venting gas or flame is discharged, a discharged portion may be as far away as possible from the electrode lead 101 of each pouch-type cell 100. In particular, another cell unit may be located at the electrode lead 101 of the pouch-type cell 100. Accordingly, because venting gas or flame is discharged away from the electrode lead 101, the influence of venting gas or flame ejected from a specific cell unit on other cell units may be minimized. Hence, in this case, thermal runaway propagation between cell units may be more effectively prevented.

Also, electrical components such as a bus bar may be located on a side where the electrode lead 101 is located. According to the embodiment, venting gas or flame may be prevented from being discharged close to these electrical components. Accordingly, damage to electrical components due to venting gas or flame may be prevented.

The venting member 300 may be configured so that a flow direction of a fluid introduced into the inlet I and a flow direction of a fluid flowing through the venting passage V are perpendicular to each other.

For example, referring to FIG. 3, a flow direction of venting gas introduced into the inlet I may be the left-right direction (X axis direction) as marked by an arrow B1. When the venting gas is introduced through the inlet I, the venting gas may flow in the front-back direction (Y axis direction) as marked by an arrow B2 in the venting passage V. In this case, the direction B1 and the direction B2 are horizontal directions, but may be perpendicular to each other.

According to this embodiment, when venting gas is ejected from the pouch-type cell 100, external discharge of a flame, spark, or active material particles ejected together with the venting gas may be suppressed. In particular, a flame, spark, or active material particles have high linearity when moving. Accordingly, as in the embodiment, when a movement direction is changed to a perpendicular direction, movement may be suppressed. Furthermore, when a flame, spark, or active material particles are discharged to the outside of the unit case 200, they may travel toward other nearby elements, for example, other cell units, thereby causing external thermal runaway or fire. However, according to the embodiment, because external discharge of a flame, spark, or active material particles is suppressed, thermal runaway or fire factors may be blocked.

Also, the venting member 300 may be configured so that a flow direction of a fluid flowing through the venting passage V and a flow direction of a fluid discharged to the outlet O are perpendicular to each other.

For example, referring to FIG. 3, a flow direction of venting gas or the like flowing in the front-back direction (Y axis direction) as marked by the arrow B2 in the venting passage V may be changed to the up-down direction (Z axis direction) as marked by an arrow B3 at the outlet O of the venting member 300. Furthermore, in this case, a flow direction of a fluid introduced into the inlet I and a flow direction of a fluid discharged to the outlet O may also be perpendicular to each other.

According to this embodiment, as described above, because a discharge path of a spark or flame is changed to a perpendicular direction, external discharge of the flame or spark may be suppressed, thereby more reliably blocking external thermal runaway or fire factors.

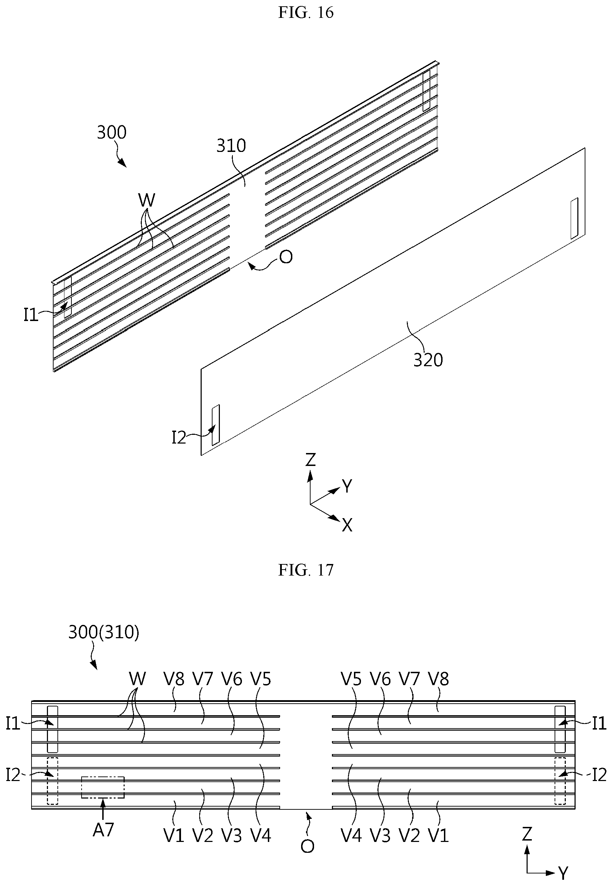

FIG. 16 is an exploded perspective view schematically illustrating a configuration of the venting member 300, according to an embodiment of the present disclosure. Also, FIG. 17 is a view schematically illustrating an internal configuration of the venting member 300, according to an embodiment of the present disclosure. For example, FIGS. 16 and 17 may illustrate the venting member 300 described in an embodiment of FIGS. 14 and 15.

Referring to FIG. 16 together with FIG. 4, the venting member 300 may be formed in a substantially plate shape, and may include a first venting plate 310 and a second venting plate 320. That is, in the venting member 300, the first venting plate 310 and the second venting plate 320 that are erected may be arranged parallel to each other to be spaced apart from each other in the left-right direction. The first venting plate 310 and the second venting plate 320 may be coupled to each other in the left-right direction to constitute one venting member 300. In this case, the first venting plate 310 and the second venting plate 320 may be separately manufactured and then may be coupled to each other by welding, bolting, or adhering edge portions, or may be integrally manufactured from the beginning through extrusion. A left-right separation space may be formed in a state where the first venting plate 310 and the second venting plate 320 are coupled to each other, and the separation space may form a hollow, that is, the venting passage V, of the venting member 300.

The venting member 300 may include the inlets I formed in opposite side surfaces. That is, the venting member 300 may include the first inlet I1 formed in the first venting plate 310 and the second inlet I2 formed in the second venting plate 320. In this case, the inlets I, that is, the first inlet I1 and the second inlet I2, formed in both side surfaces, may not be symmetrical to each other with respect to a central line in the left-right direction.

In particular, the first inlet I1 is formed in the first venting plate 310 of the venting member 300, and the second inlet I2 is formed in the second venting plate 320 without being formed in the first venting plate 310. However, in FIG. 17, for convenience of explanation, in a state where the first venting plate 310 and the second venting plate 320 are coupled to each other, a relative position of the second inlet I2 is indicated by a dashed line on the first venting plate 310.

Referring to FIGS. 16 and 17, the first inlet I1 and the second inlet I2 may not be symmetrical to each other with respect to a central axis of the venting member 300 in the left-right direction. That is, the first inlet I1 and the second inlet I2 may be formed at different positions when reversed in the left-right direction. In a more specific example, the first inlet I1 and the second inlet I2 may be formed at different positions in the up-down direction and/or the front-back direction.

In particular, two inlets I formed in different side surfaces of the venting member 300 may not overlap each other. For example, as shown in FIG. 17, the first inlet I1 and the second inlet I2 may be formed at different positions in the up-down direction, and located with no overlapping portion in the up-down direction.

In this embodiment, the first inlet I1 may open the venting passage V of the venting member 300 only in a leftward direction, and may not open the venting passage V in a rightward direction. Also, the second inlet I2 may open the venting passage V of the venting member 300 only in the rightward direction, and may not open the venting passage V in the leftward direction.

According to this embodiment of the present disclosure, venting gas or flame introduced through the inlet I on a side of the venting member 300 may be prevented from being discharged to the inlet I on the other side. For example, as shown in FIG. 14, when venting gas or flame is introduced through the first inlet I1 from a left side of the venting member 300, the venting gas or the like may be prevented from being directly discharged to the second cell C2 located on a right side of the venting member 300 through the second inlet I2. In another example, as shown in FIG. 15, when venting gas or flame is introduced through the second inlet I2 from a right side of the venting member 300, the venting gas or the like may be prevented from being directly discharged to the first cell C1 located on a left side of the venting member 300 through the first inlet I1. Accordingly, heat or flame propagation, between different pouch-type cells 100 located with the venting member 300 therebetween, through the venting member 300 may be prevented.

Also, the venting member 300 may include two or more unit passages in an inner space. For example, as shown in FIGS. 4, 16, and 17, the venting member 300 may include an inner partition wall W in the inner space. The inner partition wall W may divide the venting passage V into a plurality of unit passages. In particular, a plurality of inner partition walls W may be provided in one venting passage V.

Furthermore, the inner partition wall W may be configured to divide the venting passage V in a direction perpendicular to a flow direction of venting gas. For example, referring to an embodiment of FIGS. 3, 4, 16, and 17, when venting gas flows in the horizontal direction as marked by an arrow B2 in the venting passage V, the inner partition wall W may be located to divide the venting passage V in the up-down direction. In this case, the inner partition wall W may extend long in the front-back direction (Y axis direction) that is a flow direction of venting gas. In particular, the inner partition wall W may extend long from the inlet I to the outlet O of the venting passage V. The inner partition wall W may be located in the up-down direction (Z axis direction) to form a plurality of unit passages. For example, the venting member 300 may include seven inner partitional walls W that are located in the up-down direction to be spaced apart from each other. In this case, eight unit passages V1 to V8 may be formed in the venting member 300.

Because the inner partition wall W divides the inner space of the venting member 300, both ends in a width direction may contact different side surfaces of the venting member 300. For example, referring to an embodiment of FIG. 4, a left end of the inner partition wall W may contact an inner surface of the first venting plate 310, and a right end may contact an inner surface of the second venting plate 320. In particular, the inner partition wall W may protrude rightward from a right surface of the first venting plate 310. The right end of the inner partition wall W may extend to and contact a left surface of the second venting plate 320.

According to this embodiment of the present disclosure, rigidity of the venting member 300 may be improved. In particular, when pressure or impact is applied to a side surface of the venting member 300, the inner partition wall W may support the side surface of the venting member 300. Accordingly, damage, breakage, or deformation of the venting member 300 due to pressure or impact may be prevented. Furthermore, when venting gas or flame is generated from a specific pouch-type cell 100, a large pressure may be applied to the venting member 300. In this case, the inner partition wall W may allow the venting member 300 to maintain structural stability even when such pressure is applied.

As such, in an embodiment where a plurality of unit passages are formed in the venting member 300, the inlets I formed in both side surfaces of the venting member 300 may communicate with different unit passages. That is, the inlets I formed in different side surfaces of the venting member 300 may divide and connect a plurality of unit passages formed in the venting member 300.

For example, referring to an embodiment of FIGS. 4, 16, and 17, the first inlet I1 formed in a left surface of the venting member 300 may communicate with four unit passages V5 to V8 located in an upper portion with respect to a central line in the up-down direction in the hollow of the venting member 300. The second inlet I2 formed in a right surface of the venting member 300 may communicate with four unit passages V1 to V4 located in a lower portion with respect to the central line in the up-down direction in the hollow of the venting member 300.

According to this embodiment, a path through which venting gas or flame is discharged may be separated, for the pouch-type cells 100 located on both sides of one venting member 300. Accordingly, movement of venting gas or flame between the pouch-type cells 100 located with the venting member 300 therebetween may be more reliably blocked. Hence, in this case, the performance of blocking heat and flame between the pouch-type cells 100 may be further improved.

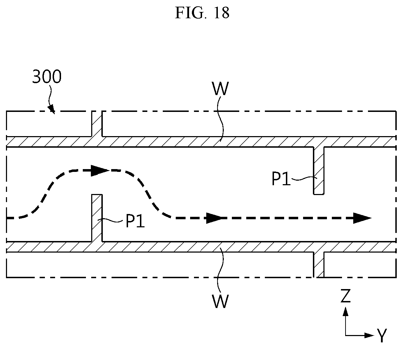

FIG. 18 is a partially enlarged view schematically illustrating an internal configuration of the venting member 300, according to another embodiment of the present disclosure. For example, FIG. 18 may be an enlarged view illustrating a modified example of a portion A7 of FIG. 17.

Referring to FIG. 18, the venting member 300 may include a protrusion P1 in the inner space. In particular, the protrusion P1 may be formed so that a flow direction of venting gas in the venting passage V is bent. For example, the venting passage V may be divided into a plurality of unit passages through a plurality of inner partition walls W located in the up-down direction in the venting member 300. In this case, the protrusions P1 may be alternately provided on upper and lower portions of each unit passage. In particular, the protrusions P1 alternately provided on the upper and lower portions may be located at different positions in the horizontal direction. In this case, a flow direction of venting gas may be repeatedly bent in the up-down direction as marked by an arrow. That is, a basic flow direction of venting gas may be a +Y axis direction, but a direction of venting gas may be changed to +Z axis and -Z axis directions while moving.

According to this embodiment of the present disclosure, movement of a flame, spark, or active material particles having high linearity in the inner space, that is, the venting passage V, of the venting member 300 may be suppressed. Accordingly, in this case, a problem caused when a flame, spark, or active material particles are discharged to the outside of the venting member 300, for example, fire or thermal propagation, may be prevented.

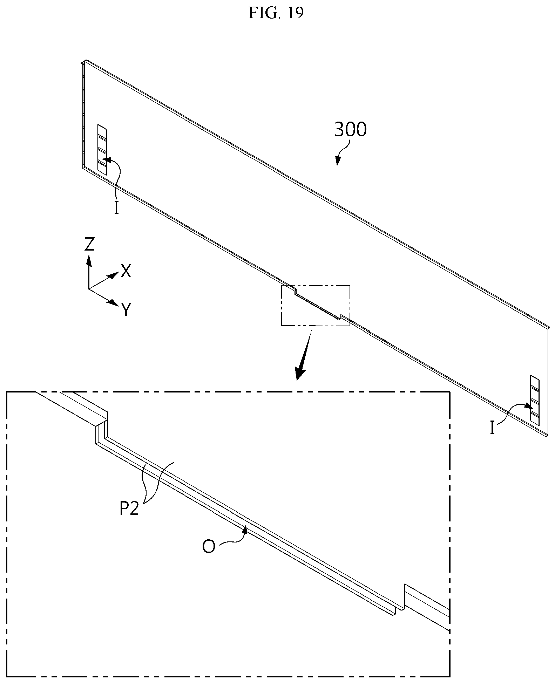

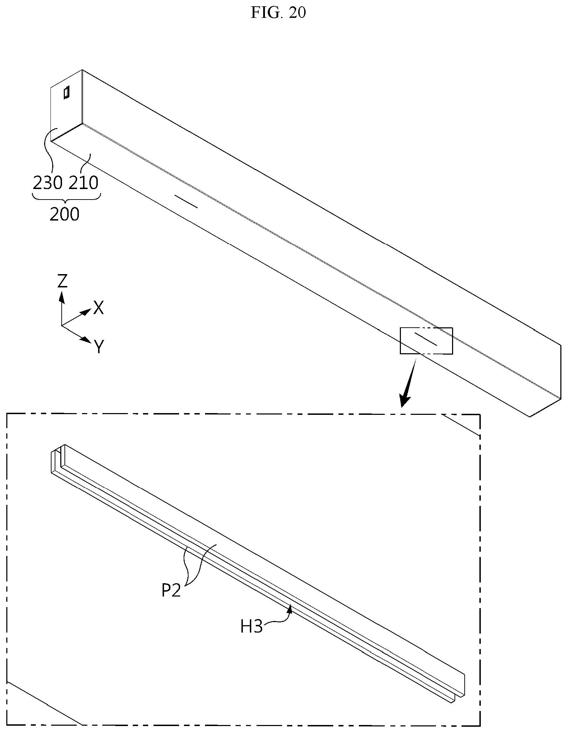

FIG. 19 is a bottom perspective view schematically illustrating a configuration of the venting member 300, according to still another embodiment of the present disclosure. FIG. 20 is a bottom perspective view schematically illustrating a configuration of a cell unit including the venting member 300 of FIG. 19.

First, referring to FIG. 19, the outlet O of the venting member 300 may protrude outward. In particular, when the outlet O of the venting member 300 is formed at a lower edge, an outlet protrusion P2 that protrudes downward may be formed around the outlet O. For example, the outlet protrusion P2 protruding downward may extend long in the front-back direction on a left side and a right side of the outlet O.

The outlet protrusion P2 may be inserted into the venting hole H3 of the unit case 200. In particular, at least a portion of the outlet protrusion P2 may protrude outward through the venting hole H3. For example, referring to FIG. 20, the outlet protrusion P2 formed on the outlet O2 of the venting member 300 may be inserted into the venting hole H3 of the unit case 200, to protrude outward from the unit case 200, in particular, downward from the lower case 210.

According to this embodiment, coupling or assemblability between the venting member 300 and the unit case 200 may be improved. Also, according to the embodiment, venting gas or the like introduced into the venting passage V of the venting member 300 may be reliably discharged to the outside of the cell unit through the outlet O of the venting member 300 and the venting hole H3 of the unit case 200. Furthermore, in the embodiment, because the outlet O of the venting member 300 may be located outside the unit case 200, venting gas of the venting member 300 may be prevented from flowing back into the unit case 200.

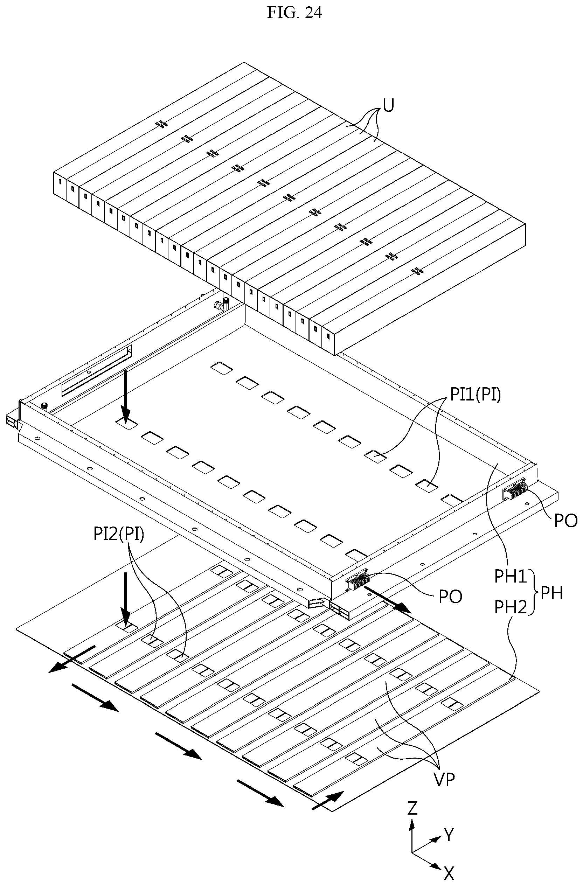

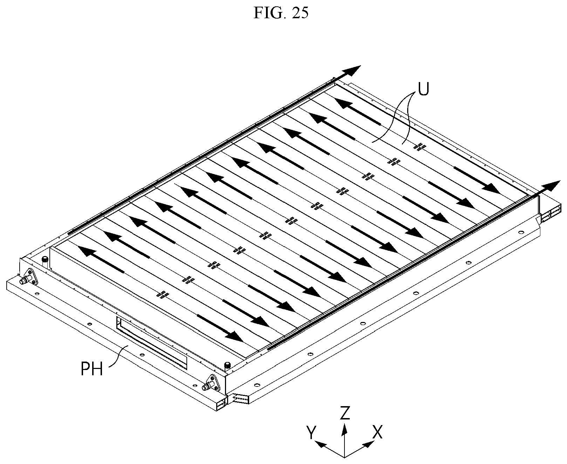

Also, the unit case 200 may be mounted in an inner space of a pack housing to constitute a battery pack, as described with reference to FIGS. 24 and 25. In this case, a venting path may also be formed in the pack housing. The outlet protrusion P2 protruding outward from the unit case 200 may be directly inserted into the venting path of the pack housing. In this case, venting gas or the like may more reliably move into the venting path of the pack housing from the venting member 300.

Also, although not shown in FIG. 20, the venting hole H3 of the unit case 200 may protrude outward. A portion protruding outward from the venting hole H3 of the unit case 200, that is, a venting protrusion, may be inserted into the venting path of the pack housing. According to this embodiment of the present disclosure, assemblability or coupling between the unit case 200 and the pack housing may be improved, and venting gas or the like discharged from the unit case 200 may smoothly move to the venting path of the pack housing.

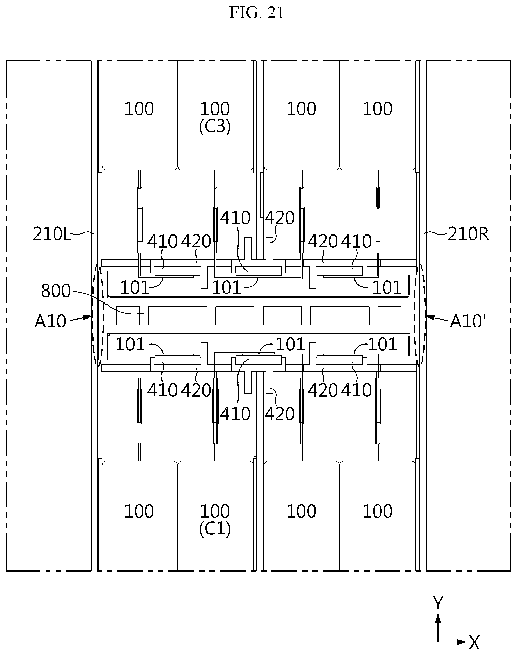

The cell unit according to the present disclosure may further include a support member 800, as shown in FIG. 1. A configuration of the support member 800 will be described in more detail with reference to FIG. 21.

FIG. 21 is a cross-sectional view taken along line A9-A9' of FIG. 2.

Referring to FIGS. 1 and 21, the support member 800 may support facing surfaces of the unit case 200. In more detail, the lower case 210 may include a left wall 210L and a right wall 210R in FIG. 21. The support member 800 may support the left wall 210L and the right wall 210R of the lower case 210. To this end, a left end A10 of the support member 800 may be formed flat to support the left wall 210L of the lower case 210. A right end A10' of the support member 800 may be formed flat to support the right wall 210R of the lower case 210.

According to this embodiment of the present disclosure, facing inner surfaces (left and right surfaces) of the unit case 200 may be supported, thereby reinforcing rigidity of the unit case 200. In particular, even when impact or pressure is applied from the outside to the unit case 200, the unit case 200 may be supported and deformation of or damage to the unit case 200 may be prevented. Accordingly, the pouch-type cells 100 and the venting member 300 accommodated in the unit case 200 may be more safely protected.

The support member 800 may be formed of a metal material such as steel or aluminum, in order to increase mechanical rigidity. In this case, an insulating member may be located between the support member 800 and the bus bar assembly 400. Alternatively, the support member 800 may formed of a plastic material to ensure mechanical rigidity above a certain level, electrical insulation, and light weight. In this case, a separate element for electrically insulating the bus bar assembly 400 or the electrode lead 101 from the support member 800 may not be included.

Also, the support member 800 may be located at a central portion in the horizontal direction, in an inner space of the unit case 200. For example, when the unit case 200 extends long in the front-back direction (Y axis direction), the support member 800 may be located at a central portion in the front-back direction to support the unit case 200 in the left-right direction. The unit case 200 may be most deformed at a central portion in a longitudinal direction. According to the embodiment, deformation of the central portion may be prevented.

Also, as shown in FIGS. 1 and 21, in the inner space of the unit case 200, two pouch-type cells 100 may be located so that side surfaces provided with the electrode leads 101 face each other. For example, referring to FIG. 21, a first cell C1 and a third cell C3 in which different types of electrode leads 101 are located in the front-back direction (Y axis direction) may be arranged in the front-back direction. In this case, the rear electrode lead 101 of the first cell C1 and the front electrode lead 101 of the third cell C3 may face each other.

In this configuration, the support member 800 may be located between the two pouch-type cells 100. That is, the support member 800 may be located between the two cells C1, C3 located in the front-back direction. Also, the support member 800 may be located between several cells as well as between two cells. For example, as shown in FIG. 21, four pouch-type cells 100 may be located in the left-right direction on a front side, and four pouch-type cells 100 may be located in the left-right direction on a rear side, with one support member 800 therebetween.

In this case, the support member 800 may separate a space between the pouch-type cells 100 located on both sides in the front-back direction. In particular, both left and right ends A10, A10' of the support member 810 may closely contact left and right walls of the unit case 200, for example, the lower case 210. An upper end and a lower end of the support member 800 may closely contact an inner surface of the unit case 200, for example, a lower surface of the upper case 220 and a top surface of the bottom of the lower case 210.

According to this embodiment of the present disclosure, propagation of venting gas, flame, or heat between cells located on both sides in the front-back direction with the support member 800 therebetween may be suppressed. For example, the support member 800 may separate four pouch-type cells 100 located on a front side from four pouch-type cells 100 located on a rear side, to block heat and flame propagation between them.

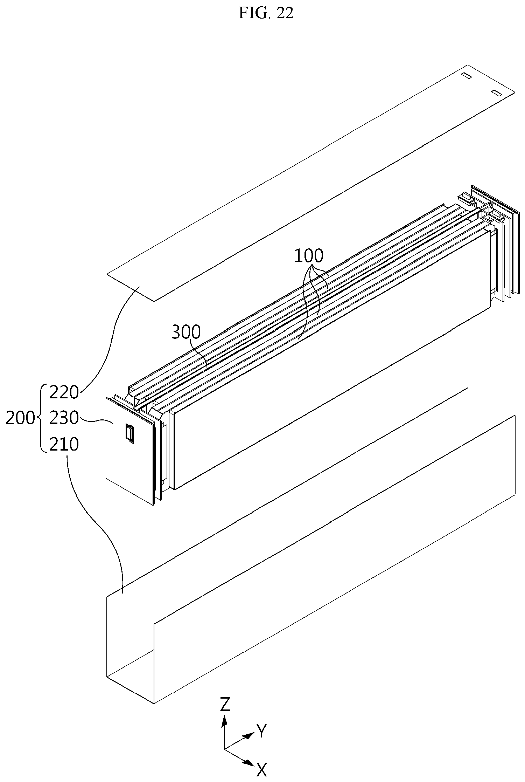

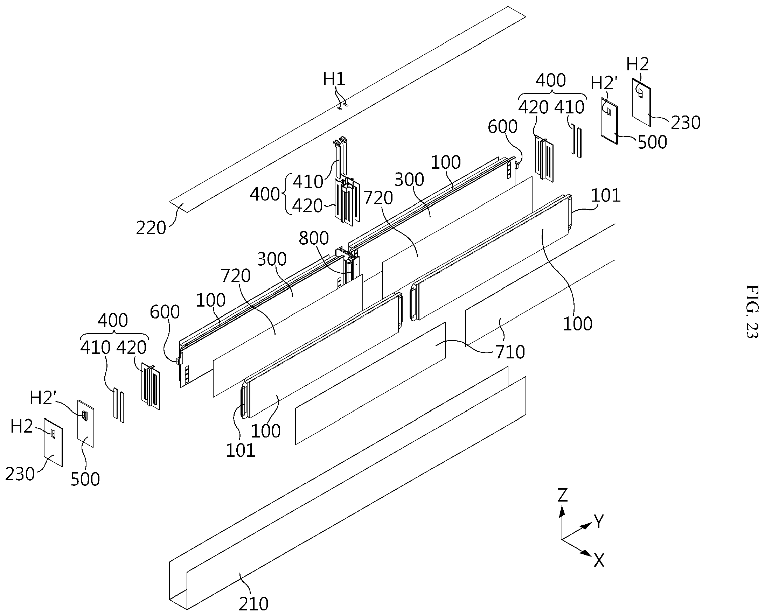

FIGS. 22 and 23 are exploded perspective views schematically illustrating a configuration of a cell unit, according to various embodiments of the present disclosure.

First, referring to FIG. 22, unlike in an embodiment of FIG. 1, a plurality of pouch-type cells 100 may not be arranged in the front-back direction Y. That is, in the cell unit, the number of cells in the front-back direction that is a longitudinal direction of the pouch-type cell 100 may be adjusted. In this case, the cell unit may be implemented by adjusting the number of pouch-type cells 100 and venting members 300 and a size (length) of the unit case 200 in the front-back direction.

Next, referring to FIG. 23, in the cell unit, the number of pouch-type cells 100 stacked in the left-right direction may be adjusted to be different from that in an embodiment of FIG. 1. For example, in the cell unit, two pouch-type cells 100 may be stacked in the left-right direction to form one cell column, and two cell columns may be arranged in the front-back direction. In this case, compared to the embodiment of FIG. 1, this cell unit may be implemented by adjusting the number of pouch-type cells 100 and a size (width) of the unit case 200 in the left-right direction.

As in an embedment of FIGS. 22 and 23, a shape, a size, and specifications of the cell unit according to the present disclosure may be easily adjusted. In particular, a size or a shape of the cell unit may be easily adjusted by adjusting the number or a size of the venting members 300 and a width or a length of the unit case 200 according to the number of pouch-type cells 100 included in the unit case 200. Accordingly, the cell unit according to the present disclosure may have excellent scalability.

As shown in FIG. 1, a plurality of pouch-type cells 100 may be located in the front-back direction. That is, a plurality of cell columns stacked adjacent to the venting member 300 may be arranged in the cell unit. For example, as shown in FIG. 1, four pouch-type cells 100 may be stacked and faced in the left-right direction to form one cell column. Two cell columns may be included in the unit case 200 of the cell unit. In this case, two venting holes H3 corresponding to the two cell columns may be formed in a surface of the unit case 200, for example, in a bottom surface, as shown in FIG. 11.

Different venting members 300 may be included in different cell columns. For example, as shown in FIG. 1, different venting members 300 may be included in two cell columns, that is, a front column and a rear column, to perform venting control of each cell column. The support member 800 may be located between the cell columns.

In another example, one venting member 300 may be configured to commonly take charge of venting control of different cell columns. For example, as shown in FIG. 13, one venting member 300 may extend long in the front-back direction (Y axis direction) from a front end of the unit case 200 to a rear end, to pass through both the front column and the rear column. In this case, the venting member 300 may pass through the support member 800. In this case, because the number of venting members 300 is reduced, assemblability and productivity of the cell unit may be improved.

FIG. 24 is an exploded perspective view schematically illustrating some elements of a battery pack, according to an embodiment of the present disclosure. Also, FIG. 25 is a view illustrating a movement of venting gas in a battery pack, according to an embodiment of the present disclosure.

Referring to FIGS. 24 and 25, a battery pack according to the present disclosure may include a plurality of cell units U according to the present disclosure. Also, the battery pack may include a pack housing PH. In particular, the plurality of cell units U may be directly accommodated in an inner space of the pack housing PH. That is, the plurality of cell units U may be directly mounted on the pack housing PH, without being mounted on a module case of a battery module.

In this case, because a proportion of a space occupied by the pouch-type cells 100 in the pack housing PH may increase, energy density of the battery pack may be further improved. In particular, the cell unit U according to the present disclosure may have the excellent heat or flame blocking performance and venting control effect. Also, because the cell unit U according to the present disclosure is protected by the unit case 200 for each small-scale pouch-type cell 100 and venting control is provided, this aspect may be advantageously applied to a cell-to-pack configuration.

In the battery pack according to the present disclosure, because the cell unit U is directly seated on the pack housing PH, cooling effect may be further improved. In particular, the unit case 200 of each cell unit U may be formed of an aluminum material. In this case, heat of the cell unit U may be easily conducted to the pack housing PH through the unit case 200, thereby more smoothly cooling each cell unit U.

In this configuration, each cell unit U may be a unit obtained by grouping a plurality of pouch-type cells 100 included in the battery pack in a small scale. In this case, the pouch-type cell may be protected with a simple structure. Also, because the unit case 200 and the venting member 300 are provided for each divided pouch-type cell group, the effect of blocking heat and/or flame propagation between a plurality of cells included in the battery pack may be achieved.

In particular, because the venting hole H3 is formed in the unit case 200 of the cell unit U according to the present disclosure, venting gas or the like in the unit case 200 may be discharged to the outside. In this case, a venting path for guiding the venting gas or the like discharged from the cell unit U may be formed in the pack housing PH. For example, as marked by an arrow in FIGS. 24 and 25, venting gas or the like introduced into the pack housing PH from the cell unit U may be guided and discharged to the outside of the battery pack through the venting path in the pack housing.

In a more specific example, the pack housing PH, in particular, a lower housing, may include two unit housings, that is, a first housing PH1 and a second housing PH2 that are stacked in the up-down direction, as shown in FIG. 24. The first housing PH1 may be a portion on which the cell unit U is directly seated, and the second housing PH2 may be located under the first housing PH1. In more detail, the first housing PH1 may include a base plate and side walls erected around the base plate, to form a receiving space of the cell unit U. The second housing PH2 may include a plate.

At least a portion of the venting path may be formed in the first housing PH1 and/or the second housing PH2. Also, at least a portion of the venting path may be formed in a space between the first housing PH1 and the second housing PH2.

For example, referring to a configuration of FIG. 24, a part of the venting path VP may be formed in the second housing PH2. In particular, the venting path may be formed in a pipe shape, for example, a flat quadrangular pipe shape, on the second housing PH2 having a plate shape. Furthermore, the venting path may protrude upward from a plate body of the second housing PH2. In this case, in the venting path of the second housing PH2, a second pack inlet PI2 through which a hollow of a pipe is open may be formed. In the first housing PH1, an opening, that is, a first pack inlet PI1, may be formed to communicate with the second pack inlet PI2 of the second housing PH2.

The venting path of the pack housing PH may communicate with the venting hole H3 of the cell unit U accommodated in the inner space of the pack housing PH. For example, as shown in FIG. 11, each cell unit U may be formed long in the front-back direction (Y axis direction), and two venting holes H3 may be spaced apart from each other in the front-back direction. In this case, the pack housing PH may include two pack inlets PI in the front-back direction as shown in FIG. 24, to correspond to the venting holes H3 of each cell unit U. When a plurality of cell units U are stacked in the left-right direction (X axis direction), a plurality of pack inlets PI may be arranged in the left-right direction, to correspond to the venting holes H3 of the plurality of cell units. Also, in the venting path of the pack housing PH, a pack outlet PO may be formed. The pack outlet PO may be provided so that venting gas or the like introduced into the venting path of the pack housing PH is discharged to the outside of the battery pack.

In particular, the venting path of the pack housing PH may be located at both ends of the cell unit U in the longitudinal direction. For example, as shown in FIGS. 24 and 25, when a plurality of cell units U are formed long in the front-back direction (Y axis direction) and arranged in the left-right direction (X axis direction), the venting paths may be located on both sides of the pack housing PH in the front-back direction. The pack outlet PO of the pack housing PH may be formed at an end of the cell units U in a stacking direction. For example, the pack outlet PO may be located at a right end (+X axis direction end) of the pack housing PH.

In this embodiment, venting gas or the like discharged from each cell unit U may move to a front end and a rear end of the pack housing PH via the pack inlets PI1, PI21 and the venting path formed in the pack housing PH. The venting gas or the like may move in at least one direction, for example, rightward, and may be discharged to the outside of the pack housing PH through the pack outlet PO.

Also, as in an embodiment of FIGS. 24 and 25, when a plurality of cell units U are seated on the pack housing PH, mechanical rigidity of the battery pack may be supplemented. In particular, an end of each cell unit U in the longitudinal direction may contact an inner surface of the pack housing PH. For example, a front end and a rear end of the cell unit U may respectively contact a front inner surface and a rear inner surface of the pack housing PH. Accordingly, the cell unit U may support inner surfaces of the pack housing PH, that is, the front inner surface and the rear inner surface. In this case, even when pressure or impact is applied to a front side or a rear side of the pack housing PH, the pack housing PH may be supported by the cell unit U, and thus, damage or breakage of the pack housing PH or elements, for example, the cell unit U, included in the pack housing PH may be prevented. In particular, according to this embodiment, a separate center beam for supporting the inner space of the pack housing PH in the front-back direction may be removed. Hence, energy density, assemblability, and productivity of the battery pack may be further improved.

The battery pack according to the present disclosure may further include a control unit, in addition to the cell unit according to the present disclosure. The control unit may be configured to grasp or control an overall operation or environment of the battery pack, a charging/discharging operation or state of the pouch-type cell 100, and so on. For example, the control unit may be a battery management system (BMS) itself, or may include a BMS. In particular, the control unit may not be included in a battery module unit, but may be included in a battery pack unit. The control unit is well known at the time of filing the present application, and thus, a detailed description thereof will be omitted.

Also, the battery pack according to the present disclosure may further include various other elements of a battery pack, for example, a bus bar, a pack housing, a relay, and a current sensor, which are well known at the time of filing the present application, in addition to the cell unit or the control unit.

Although a cell-to-pack (CTP) configuration in which the cell unit U is directly mounted on the pack housing PH has been described in the embodiment of FIGS. 24 and 25, the present disclosure is not necessarily limited to the CTP configuration. That is, the cell unit U may be mounted on a module case, modularized into a battery module, and then mounted on the pack housing PH.

A battery module according to the present disclosure may include a plurality of cell units according to the present disclosure described above. That is, the cell unit according to the present disclosure may be a cell group of a smaller scale or unit than a general battery module. The battery module according to the present disclosure may include a module case in which a plurality of cell units are accommodated. For example, the module case may include a lower module housing and an upper module housing, and an inner space may be defined by the lower module housing and the upper module housing.

The cell unit according to the present disclosure may be applied to a vehicle such as an electric vehicle or a hybrid vehicle. That is, a vehicle according to the present disclosure may include the cell unit according to the present disclosure, or the battery pack or the battery module including the cell unit. Also, the vehicle according to the present disclosure may further include various other elements included in a vehicle, in addition to the cell unit, the battery pack, or the battery module. For example, the vehicle according to the present disclosure may further include a vehicle body, a motor, or a control device such as an electronic control unit (ECU), in addition to the cell unit according to the present disclosure.

Also, the cell unit according to the present disclosure may be applied to an energy storage system (ESS). That is, an ESS according to the present disclosure may include the cell unit, the battery pack, or the battery module according to the present disclosure.

While one or more embodiments of the present disclosure have been described with reference to the embodiments and figures, the present disclosure is not limited thereto, and it will be understood by one of ordinary skill in the art that various changes in form and details may be made therein without departing from the scope of the present disclosure as defined by the following claims.

### [Description of Reference Numerals]

100: pouch-type cell
101: electrode lead
200: unit case
210: lower case, 220: upper case, 230: end case
300: venting member
310: first venting plate, 320: 2 venting plate
400: bus bar assembly
410: bus bar terminal, 420: bus bar frame, 430: terminal sealing member
500: insulating cover
600: connector
710: pad member, 720: sheet member
800: support member
900: terminal cover
V: venting passage
I: inlet
O: outlet
E: unit terminal
H1: terminal hole
H2: connecting hole
H3: venting hole
T: terrace portion
W: inner partition wall
U: cell unit
PH: pack housing
PI: pack inlet
PO: pack outlet

## Claims

1. A cell unit (U) comprising:
a plurality of pouch-type cells (100) stacked in a horizontal direction;
a unit case (200) having an inner space in which the plurality of pouch-type cells (100) is accommodated; and
a venting member (300) located in the inner space of the unit case (200), comprising a venting passage (V) therein, and configured to discharge venting gas discharged from the plurality of pouch-type cells (100); wherein
the unit case (200) comprises a lower case (210) formed by bending a plate-shaped member, and an upper case (220) coupled to an upper open portion of the lower case (210),
the venting member (300) is located between the plurality of pouch-type cells (100),
**characterized in that**
the venting member comprises two inlets corresponding to one pouch-type cell, and an outlet formed between the two inlets.

2. The cell unit (U) according to claim 1, wherein the unit case (200) comprises a unit terminal (E) electrically connected to an electrode lead (101) of the plurality of pouch-type cells (100) accommodated in the inner space and exposed to outside.

3. The cell unit (U) according to claim 1, wherein the venting member (300) is formed in a plate shape and faces adjacent pouch-type cells (100).

4. The cell unit according to claim 1, wherein the venting member is attached to an inner surface of the unit case.

5. The cell unit (U) according to claim 1, wherein the venting member (300) is located on each of both sides of at least one of the plurality of pouch-type cell (100) accommodated in the unit case (200).

6. The cell unit (U) according to claim 1, wherein the venting member (300) comprises an inlet (I) formed in a side surface facing at least one of the plurality of pouch-type cells (100) and an outlet (O) formed in a side surface not facing at least one of the plurality of pouch-type cells (100).

7. The cell unit (U) according to claim 1, wherein the venting member (300) comprises an inlet (I) formed in a portion facing a terrace portion (T) of at least one of the plurality of pouch-type cells (100).

8. The cell unit (U) according to claim 1, wherein the venting member (300) is configured so that a flow direction of a fluid introduced into an inlet (I) and a flow direction of a fluid flowing through the venting passage (V) are perpendicular to each other.

9. The cell unit (U) according to claim 1, wherein the venting member (300) is configured so that a flow direction of a fluid flowing through the venting passage (V) and a flow direction of a fluid discharged to an outlet (O) are perpendicular to each other.

10. The cell unit (U) according to claim 1, wherein the venting member (300) comprises inlets (I) formed in opposite side surfaces,
wherein the inlets (I) formed in the opposite side surfaces are not symmetrical to each other.

11. The cell unit (U) according to claim 10, wherein the venting member (300) comprises two or more unit passages in an inner space,
wherein the inlets (I) formed in the opposite side surfaces communicate with different unit passages.

12. The cell unit (U) according to claim 1, wherein the unit case (200) comprises a venting hole (H3) formed at a position corresponding to an outlet (O) of the venting member (300).

13. The cell unit (U) according to claim 1, further comprising a support member (800) supporting facing inner surfaces of the unit case (200).

14. The cell unit (U) according to claim 13, wherein two pouch-type cells (100) are arranged in the inner surface of the unit case (200) so that side surfaces provided with electrode leads (101) face each other,
wherein the support member (800) is located between the two pouch-type cells (100) arranged so that the electrode leads (101) face each other.

15. A battery pack comprising a plurality of cell units (U) according to any one of claims 1 to 14.

## Patentansprüche

1. Zelleinheit (U), umfassend:
eine Vielzahl von Pouch-Typ-Zellen (100), die in einer horizontalen Richtung gestapelt sind;
ein Einheitsgehäuse (200), das einen Innenraum aufweist, in dem die Vielzahl von Pouch-Typ-Zellen (100) aufgenommen ist; und
ein Entlüftungselement (300), das sich im Innenraum des Einheitsgehäuses (200) befindet und einen Entlüftungskanal (V) darin umfasst und dazu konfiguriert ist, Entlüftungsgas abzuführen, das von der Vielzahl von Pouch-Typ-Zellen (100) abgeführt wird;
wobei
das Einheitsgehäuse (200) ein unteres Gehäuse (210), das durch Biegen eines plattenförmigen Elements gebildet ist, und ein oberes Gehäuse (220), das mit einem oberen offenen Abschnitt des unteren Gehäuses (210) gekoppelt ist, umfasst,
das Entlüftungselement (300) sich zwischen der Vielzahl von Pouch-Typ-Zellen (100) befindet,
**dadurch gekennzeichnet, dass**
das Entlüftungselement zwei Einlässe, die einer Pouch-Typ-Zelle entsprechen, und einen Auslass, der zwischen den beiden Einlässen gebildet ist, umfasst.

2. Zelleinheit (U) nach Anspruch 1, wobei das Einheitsgehäuse (200) einen Einheitsanschluss (E) umfasst, der elektrisch mit einer Elektrodenableitung (101) der Vielzahl von Pouch-Typ-Zellen (100) verbunden ist, die im Innenraum aufgenommen und nach außen freigelegt ist.

3. Zelleinheit (U) nach Anspruch 1, wobei das Entlüftungselement (300) in Plattenform ausgebildet ist und benachbarten Pouch-Typ-Zellen (100) zugewandt ist.

4. Zelleinheit nach Anspruch 1, wobei das Entlüftungselement an einer Innenfläche des Einheitsgehäuses angebracht ist.

5. Zelleinheit (U) nach Anspruch 1, wobei das Entlüftungselement (300) auf jeder der beiden Seiten von mindestens einer der Vielzahl von Pouch-Typ-Zellen (100) angeordnet ist, die im Einheitsgehäuse (200) aufgenommen ist.

6. Zelleinheit (U) nach Anspruch 1, wobei das Entlüftungselement (300) einen Einlass (I), der in einer Seitenfläche ausgebildet ist, die mindestens einer der Vielzahl von Pouch-Typ-Zellen (100) zugewandt ist, und einen Auslass (O), der in einer Seitenfläche ausgebildet ist, die nicht mindestens einer der Vielzahl von Pouch-Typ-Zellen (100) zugewandt ist, umfasst.

7. Zelleinheit (U) nach Anspruch 1, wobei das Entlüftungselement (300) einen Einlass (I) umfasst, der in einem Abschnitt ausgebildet ist, der einem Terrassenabschnitt (T) von mindestens einer der Vielzahl von Pouch-Typ-Zellen (100) zugewandt ist.

8. Zelleinheit (U) nach Anspruch 1, wobei das Entlüftungselement (300) so konfiguriert ist, dass eine Strömungsrichtung eines in einen Einlass (I) eingeführten Fluids und eine Strömungsrichtung eines durch den Entlüftungskanal (V) strömenden Fluids senkrecht zueinander sind.

9. Zelleinheit (U) nach Anspruch 1, wobei das Entlüftungselement (300) so konfiguriert ist, dass eine Strömungsrichtung eines durch den Entlüftungskanal (V) strömenden Fluids und eine Strömungsrichtung eines zu einem Auslass (O) abgeführten Fluids senkrecht zueinander sind.

10. Zelleinheit (U) nach Anspruch 1, wobei das Entlüftungselement (300) Einlässe (I) umfasst, die in gegenüberliegenden Seitenflächen ausgebildet sind,
wobei die in den gegenüberliegenden Seitenflächen ausgebildeten Einlässe (I) nicht symmetrisch zueinander sind.

11. Zelleinheit (U) nach Anspruch 10, wobei das Entlüftungselement (300) zwei oder mehr Einheitspassagen in einem Innenraum umfasst,
wobei die in den gegenüberliegenden Seitenflächen ausgebildeten Einlässe (I) mit unterschiedlichen Einheitspassagen in Verbindung stehen.

12. Zelleinheit (U) nach Anspruch 1, wobei das Einheitsgehäuse (200) ein Entlüftungsloch (H3) umfasst, das an einer Position ausgebildet ist, die einem Auslass (O) des Entlüftungselements (300) entspricht.

13. Zelleinheit (U) nach Anspruch 1, ferner umfassend ein Stützelement (800), das gegenüberliegende Innenflächen des Einheitsgehäuses (200) stützt.

14. Zelleinheit (U) nach Anspruch 13, wobei zwei Pouch-Typ-Zellen (100) in der Innenfläche des Einheitsgehäuses (200) so angeordnet sind, dass mit Elektrodenableitungen (101) versehene Seitenflächen einander zugewandt sind,
wobei das Stützelement (800) zwischen den beiden Pouch-Typ-Zellen (100) angeordnet ist, die so angeordnet sind, dass die Elektrodenableitungen (101) einander zugewandt sind.

15. Batteriepack, umfassend eine Vielzahl von Zelleinheiten (U) nach einem der Ansprüche 1 bis 14.

## Revendications

1. Unité de cellule (U) comprenant :
une pluralité de cellules de type poche (100) empilées dans une direction horizontale ;
un boîtier d'unité (200) ayant un espace intérieur dans lequel la pluralité de cellules de type poche (100) est logée ; et
un élément de ventilation (300) situé dans l'espace intérieur du boîtier d'unité (200), comprenant un passage de ventilation (V) à l'intérieur, et configuré pour évacuer le gaz de ventilation évacué de la pluralité de cellules de type poche (100) ;
dans laquelle
le boîtier d'unité (200) comprend un boîtier inférieur (210) formé en pliant un élément en forme de plaque, et un boîtier supérieur (220) couplé à une partie ouverte supérieure du boîtier inférieur (210),
l'élément de ventilation (300) est situé entre la pluralité de cellules de type poche (100),
**caractérisée en ce que**
l'élément de ventilation comprend deux entrées correspondant à une cellule de type poche, et une sortie formée entre les deux entrées.

2. L'unité de cellule (U) selon la revendication 1, dans laquelle le boîtier d'unité (200) comprend une borne d'unité (E) connectée électriquement à une sortie d'électrode (101) de la pluralité de cellules de type poche (100) logées dans l'espace intérieur et exposée à l'extérieur.

3. L'unité de cellule (U) selon la revendication 1, dans laquelle l'élément de ventilation (300) est formé en forme de plaque et fait face à des cellules de type poche adjacentes (100).

4. L'unité de cellule selon la revendication 1, dans laquelle l'élément de ventilation est fixé à une surface intérieure du boîtier d'unité.

5. L'unité de cellule (U) selon la revendication 1, dans laquelle l'élément de ventilation (300) est situé de chaque côté d'au moins une de la pluralité de cellules de type poche (100) logées dans le boîtier d'unité (200).

6. L'unité de cellule (U) selon la revendication 1, dans laquelle l'élément de ventilation (300) comprend une entrée (I) formée dans une surface latérale faisant face à au moins une de la pluralité de cellules de type poche (100) et une sortie (O) formée dans une surface latérale ne faisant pas face à au moins une de la pluralité de cellules de type poche (100).

7. L'unité de cellule (U) selon la revendication 1, dans laquelle l'élément de ventilation (300) comprend une entrée (I) formée dans une partie faisant face à une partie en terrasse (T) d'au moins une de la pluralité de cellules de type poche (100).

8. L'unité de cellule (U) selon la revendication 1, dans laquelle l'élément de ventilation (300) est configuré de sorte qu'une direction d'écoulement d'un fluide introduit dans une entrée (I) et une direction d'écoulement d'un fluide s'écoulant à travers le passage de ventilation (V) sont perpendiculaires l'une à l'autre.

9. L'unité de cellule (U) selon la revendication 1, dans laquelle l'élément de ventilation (300) est configuré de sorte qu'une direction d'écoulement d'un fluide s'écoulant à travers le passage de ventilation (V) et une direction d'écoulement d'un fluide évacué vers une sortie (O) sont perpendiculaires l'une à l'autre.

10. L'unité de cellule (U) selon la revendication 1, dans laquelle l'élément de ventilation (300) comprend des entrées (I) formées dans des surfaces latérales opposées,
dans laquelle les entrées (I) formées dans les surfaces latérales opposées ne sont pas symétriques l'une par rapport à l'autre.

11. L'unité de cellule (U) selon la revendication 10, dans laquelle l'élément de ventilation (300) comprend deux passages unitaires ou plus dans un espace intérieur,
dans laquelle les entrées (I) formées dans les surfaces latérales opposées communiquent avec des passages unitaires différents.

12. L'unité de cellule (U) selon la revendication 1, dans laquelle le boîtier d'unité (200) comprend un trou de ventilation (H3) formé à une position correspondant à une sortie (O) de l'élément de ventilation (300).

13. L'unité de cellule (U) selon la revendication 1, comprenant en outre un élément de support (800) supportant des surfaces intérieures en regard du boîtier d'unité (200).

14. L'unité de cellule (U) selon la revendication 13, dans laquelle deux cellules de type poche (100) sont agencées dans la surface intérieure du boîtier d'unité (200) de sorte que des surfaces latérales pourvues de sorties d'électrode (101) se font face,
dans laquelle l'élément de support (800) est situé entre les deux cellules de type poche (100) agencées de sorte que les sorties d'électrode (101) se font face.

15. Un bloc-batterie comprenant une pluralité d'unités de cellule (U) selon l'une quelconque des revendications 1 à 14.
